# FASCICULE DE BREVET EUROPEEN

(11) **EP 3 671 259 B1**
(45) Date de publication et mention de la délivrance du brevet: **10.11.2021**
(21) Numéro de dépôt: 19214984.7
(22) Date de dépôt: 10.12.2019
(51) Int. Cl.: G01S 7/40, G01S 13/90

(54) **PROCEDE ET SYSTEME DE NEUTRALISATION DE L'EFFET DES VIBRATIONS D'UN AERONEF A VOILURE TOURNANTE POUR RADAR DOPPLER AEROPORTE**
NEUTRALISIERUNGSVERFAHREN UND -SYSTEM DES SCHWINGUNGSEFFEKTS EINES DREHFLÜGEL-LUFTFAHRZEUGS FÜR BORD-DOPPLER-RADAR
METHOD AND SYSTEM FOR NEUTRALISING THE EFFECT OF THE VIBRATIONS OF A ROTARY-WING AIRCRAFT FOR AIRBORNE DOPPLER RADAR

(30) Priorité: 20.12.2018 FR 1873374
(43) Date de publication de la demande: 24.06.2020
(73) Titulaire: Thales, 92400 Courbevoie (FR)
(72) Inventeur: GARREC, Patrick, 33701 Merignac Cedex (FR); COTTRON, Rodolphe, 33701 Merignac Cedex (FR); VEYRAC, Yoan, 33701 Merignac Cedex (FR)
(74) Mandataire: Marks & Clerk France

(56) Documents cités:
- SCHIPPERS H ET AL: "Vibrating antennas and compensation techniques Research in NATO/RTO/SET 087/RTG 50", AEROSPACE CONFERENCE, 2007 IEEE, IEEE, PISCATAWAY, NJ, USA, 3 mars 2007 (2007-03-03), pages 1-13, XP031214085, ISBN: 978-1-4244-0524-4
- GAO YUEXIN ET AL: "Paired echo suppression algorithm in helicopter-borne SAR imaging", IET RADAR SONAR NAVIGATION, THE INSTITUTION OF ENGINEERING AND TECHNOLOGY, UK, vol. 11, no. 11, 1 novembre 2017 (2017-11-01), pages 1605-1612, XP006063902, ISSN: 1751-8784, DOI: 10.1049/IET-RSN.2017.0068
- PFITZNER M ET AL: "FPGA based architecture for real-time SAR processing with integrated motion compensation", CONFERENCE PROCEEDINGS OF 2013 ASIA-PACIFIC CONFERENCE ON SYNTHETIC APERTURE RADAR (APSAR), IEICE, 23 septembre 2013 (2013-09-23), pages 521-524, XP032541448,

## Description

La présente invention concerne un procédé et un système de neutralisation de l'effet des vibrations d'un aéronef à voilure tournante pour radar Doppler aéroporté.

Le domaine technique de l'invention est celui du traitement Doppler et le domaine d'application concerne principalement les radars pour hélicoptère.

L'impact des déplacements de l'aéronef porteur sur le fonctionnement d'un radar aéroporté est un problème bien connu. En particulier, ces déplacements ont un fort impact dans le cadre de traitements radar cohérents tels que l'extraction de la vitesse Doppler.

Dans le cas d'un aéronef à voilure tournante, les mouvements des rotors engendrent des vibrations significatives de la structure complète du porteur. Les modes vibratoires du porteur ont un impact sur le traitement cohérent qui est effectué. La gamme de fréquence typique des vibrations se situe de quelques Hertz à quelques dizaines de Hertz. Le traitement Doppler nécessite une intégration reposant sur la cohérence de phase du signal, d'autant plus longue que la résolution vitesse souhaitée est fine. Les déplacements de l'antenne radar induits par les vibrations du porteur parasitent ces traitements, et ce d'autant plus que le temps d'intégration est important.

La détermination précise de la vitesse sol du porteur ou encore la détection de cibles lentes qu'il est difficile de dissocier des retours de sol ou de mer sont des applications particulièrement impactées.

La compensation des mouvements du porteur revêt une importance particulière dans la technique de radar à ouverture synthétique (plus connu sous l'acronyme SAR (en anglais « Synthetic Aperture Radar »). Afin de reconstruire correctement les images issues de différents angles de vues, il est nécessaire de connaitre précisément les déplacements du porteur. Ces mesures proviennent en général d'une centrale inertielle présente sur le porteur, elles permettent de modéliser son déplacement et ainsi de réaliser un traitement cohérent. En outre, les imperfections de correction du déplacement du porteur peuvent être corrigées a posteriori, par traitement algorithmique sur les images obtenues. La méthode la plus connue est un algorithme PGA (en anglais « Phase Gradient Autofocus »), comme par exemple celui décrit dans la demande de brevet US 4924229 A, intitulée "Phase correction system for automatic focusing of synthetic aperture radar", qui permet de refocaliser l'image en prenant pour hypothèse une scène statique.

En ce qui concerne les traitements Doppler, la compensation des mouvements du porteur se fait également en général grâce à une centrale inertielle. Cela nécessite une centrale travaillant à une fréquence suffisante pour échantillonner correctement les mouvements de vibration, tout en ayant une sensibilité suffisante.

Par ailleurs, les mesures de la centrale du porteur doivent permettre de déduire les mouvements du centre de phase des antennes radar. Cela dépend des zones d'installation des antennes radar et du couplage mécanique entre la centrale inertielle et les antennes radar, ce qui est un inconvénient de cette méthode. L'article de Schippers H. et al., intitulé « Vibrating antennas and compensation techniques research in NATO/RTO/SET 087/RTG 50 », publié dans Aerospace Conférence, 2007 IEEE, Piscataway, NJ, USA, 3 mars 2007, pages 1-13, décrit des antennes radar vibrantes et des techniques de compensations des vibrations basées sur des mesures courantes fournies par des capteurs de vibrations le long de l'antenne.

Un premier problème technique que résout l'invention est de proposer un procédé de neutralisation de l'effet des vibrations d'un aéronef à voilure tournante pour un radar Doppler aéroporté qui évite d'utiliser une centrale inertielle pour sa mise en œuvre et de contraindre le choix des zones d'installation de la ou des antennes radar.

Un deuxième problème technique que résout l'invention est de proposer un procédé de neutralisation de l'effet des vibrations d'un aéronef à voilure tournante pour un radar Doppler aéroporté dans lequel la maîtrise du couplage entre le(s) capteur(s) de vibrations et la ou les antennes radar est améliorée.

A cet effet, l'invention a pour objet un procédé de neutralisation active de l'effet des vibrations d'un aéronef à voilure tournante pour un radar Doppler un radar Doppler mono-statique, ou un radar bi-statique, le radar Doppler mono-statique comportant :
- une antenne radar émission-réception partageant un même centre de phase O, et
- une chaîne radar d'émission, connectée à une entrée émission de l'antenne émission-réception du radar Doppler mono-statique ; et
- une chaîne radar de réception, connectée à une sortie réception de l'antenne émission-réception du radar Doppler mono-statique ; ou,
le radar Doppler bi-statique comportant :
- une première antenne radar émission ayant un centre de phase émission O1 et une deuxième antenne radar réception, distante de la première antenne émission, ayant un centre de phase réception O2 ; et
- une chaîne radar d'émission, connectée à une entrée émission de la première antenne radar émission du radar Doppler bi-statique ; et
- une chaine radar de réception, connectée à une sortie réception de la deuxième antenne radar réception du radar bi-statique.

Le procédé de neutralisation active est mis en œuvre par un système de neutralisation active comportant :
- un capteur de vibrations tridimensionnel par antenne radar, solidaire de ladite antenne, et proche de son centre de phase, O, O1, O2, ou un unique capteur de vibrations tridimensionnel, partagé par la première antenne radar émission et la deuxième antenne radar réception et proche d'un centre de phase O1, O2 lorsque les antennes émission et réception sont proches et fortement couplées mécaniquement ; et
- un dispositif d'estimation du déplacement de chaque capteur de vibration et de neutralisation de leur déplacement.

Le procédé de neutralisation active est caractérisé en ce qu'il comporte :
- une première étape de mesure et d'extrapolation temporelle des modes vibratoires au niveau de l'antenne émission-réception ou de la première antenne émission et de la deuxième antenne réception près de leur(s) centre(s) de phase associé(s) O, O1 et O2 ; puis
- une deuxième étape d'estimation des déplacements attendus de l'antenne d'émission-réception ou de la première antenne émission et de la deuxième antenne réception ; puis
- une troisième étape de compensation des déplacements attendus de la ou des antennes radar au niveau de la chaine émission ou de la chaine réception.

Suivant des modes particuliers de réalisation, le procédé de neutralisation active de l'effet des vibrations d'un aéronef à voilure tournante pour un radar Doppler aéroporté comprend l'une ou plusieurs des caractéristiques suivantes, prises isolément ou en combinaison :
- la troisième étape de compensation des déplacements attendus du ou des centres de phase O, O1, O2, comporte une quatrième étape de calcul d'au moins une projection des déplacements sur une direction de pointage de l'antenne émission-réception ou de la deuxième antenne de réception et une cinquième étape de détermination d'au moins un déphasage de compensation correspondant à une direction de pointage ;
- pour chaque capteur de mesure, la première étape de mesure et d'extrapolation temporelle des modes vibratoires du capteur de vibration comporte, exécutées successivement une sous-étape de filtrage passe-bande de signaux d'accélérations triaxiales mesurées, une sous-étape d'analyse fréquentielle complexe des modes vibratoires et une sous-étape d'interpolation des profils d'accélération par filtrage des bandes images, et d'extrapolation temporelle à des instants immédiatement suivants ; et la deuxième étape d'estimation des déplacements attendus comporte, exécutées successivement, une sous-étape d'intégration des accélérations en des vitesses, une sous-étape d'intégration des vitesses en déplacements attendus ;
- le procédé de neutralisation active défini ci-dessus comporte en outre une étape d'apprentissage par axe de visée, exécutée au sol ou en vol sur des balises fixes connues, configurée pour fournir un modèle d'affinement des corrections à appliquer au niveau de la chaine radar d'émission ou au niveau de la chaine radar de réception, qui prend en compte les variations des vibrations corrélées avec le régime moteur et la vitesse de l'aéronef à voilure tournante ;
- le radar Doppler est un radar mono-statique comportant une antenne radar émission-réception avec un même centre de phase O ; et le système de neutralisation active comporte un capteur de vibrations tridimensionnel, solidaire de l'antenne rada émission-réception et proche de son centre de phase ; et les modes vibratoires de l'antenne radar sont mesurés par le capteur de vibrations dans la première étape de mesure et d'extrapolation temporelle ; et les déplacements attendus du centre de phase O de l'antenne radar émission-réception sont estimés dans la deuxième étape ; et la compensation des déplacements attendus du centre de phase O de l'antenne émission-réception est effectuée au niveau de la génération de la forme d'onde dans la chaine radar d'émission, en calculant la projection des déplacements attendus du centre de phase O sur la direction de pointage de l'antenne radar émission-réception, puis en déterminant un déphasage de compensation Δ*ϕ* correspondant à la direction de pointage égal à deux fois l'amplitude dp des déplacements attendus divisée par la longueur d'onde *λ* du radar ;
- le radar Doppler est un radar bi-statique comportant une première antenne radar émission ayant un centre de phase émission O1 et une deuxième antenne radar réception, distante de la première antenne émission et ayant un centre de phase réception O2 ; et le système de neutralisation active comporte un premier capteur de vibrations tridimensionnel, solidaire de la première antenne radar émission et proche de son centre de phase émission O1, et un deuxième capteur de vibrations tridimensionnel, solidaire de la deuxième antenne radar réception et proche de son centre de phase réception O2 ; et les modes vibratoires de la première antenne radar émission, respectivement de la deuxième antenne radar réception sont mesurés, dans la première étape de mesure et d'extrapolation temporelle, par le premier capteur de vibrations (160), respectivement le deuxième capteur de vibrations ; et les déplacements attendus du centre de phase émission O1 de la première antenne radar émission et les déplacements attendus du centre de phase réception O2 de la deuxième antenne radar réception sont estimés dans la deuxième étape ; et la compensation des déplacements attendus du centre de phase émission O1 et du centre de phase réception O2 est effectuée au niveau de la génération de la forme d'onde dans la chaine radar émission, en calculant la projection des déplacements attendus du centre de phase émission sur la direction de pointage de la première antenne d'émission et la projection des déplacements attendus du centre de phase Im réception sur la direction de pointage de la deuxième antenne de réception ; puis en déterminant un déphasage de compensation Δ*ϕ* correspondant aux directions respective de pointage de la première antenne émission et de la deuxième antenne de réception en fonction des déplacements respectifs du centre de phase émission et du centre de phase réception et de la longueur d'onde *λ* du signal radar ;
- une étape d'apprentissage par axe de visée, est exécutée au sol ou en vol sur des balises fixes connues est mise en œuvre, l'étape d'apprentissage étant configurée pour fournir un modèle d'affinement des corrections à appliquer au niveau de la génération de la forme d'onde dans la chaîne radar d'émission qui prend en compte les variations des vibrations corrélées avec le régime moteur et la vitesse de l'aéronef à voilure tournante ;
- le procédé de neutralisation active ci-dessus comprend une étape de détection de signaux de brouilleurs non corrélés avec les vibrations de l'aéronef à voilure tournante, l'étape de détection des signaux des brouilleurs étant mise en œuvre parallèlement à la compensation des échos radar reçus, corrélés avec les déplacements de la ou des antennes ;
- le radar Doppler est un radar mono-statique comportant une antenne radar émission-réception avec un même centre de phase O ; et le système de neutralisation active comporte un capteur de vibrations tridimensionnel, solidaire de l'antenne radar émission-réception et proche de son centre de phase O; et les modes vibratoires de l'antenne radar sont mesurés par le capteur de vibrations dans la première étape de mesure et d'extrapolation temporelle ; et les déplacements attendus du centre de phase de l'antenne radar émission-réception O sont estimés dans la deuxième étape ; et la compensation des déplacements attendus du centre de phase O de l'antenne émission-réception est effectuée au niveau de la démodulation du ou des échos radar reçus dans la chaine radar de réception, en calculant la projection des déplacements attendus du centre de phase O sur la direction de pointage de l'antenne radar émission-réception, puis en déterminant un déphasage de compensation Δ*ϕ* correspondant à la direction de pointage égal à deux fois l'amplitude dp des déplacements attendus du centre de phase O correspondant à la direction de pointage diffusée par la longueur d'onde *λ* du signal radar ;
- le radar Doppler est un radar bi-statique comportant une première antenne radar émission ayant un centre de phase émission O1 et une deuxième antenne radar réception, distante de la première antenne émission et ayant un centre de phase réception O2 ; et le système de neutralisation active comporte un premier capteur de vibrations tridimensionnel, solidaire de la première antenne radar émission et proche de son centre de phase émission O1, et un deuxième capteur de vibrations tridimensionnel, solidaire de la deuxième antenne radar réception et proche de son centre de phase réception O2 ; et les modes vibratoires de la première antenne radar émission, respectivement de la deuxième antenne radar réception sont mesurés, dans la première étape de mesure et d'extrapolation temporelle, par le premier capteur de vibrations, respectivement le deuxième capteur de vibrations ; et les déplacements attendus du centre de phase émission de la première antenne radar émission et les déplacements attendus du centre de phase réception de la deuxième antenne radar réception sont estimés dans le deuxième étape ; et la compensation des déplacements attendus du centre de phase émission et du centre de phase réception est effectuée au niveau de la démodulation du ou des échos radar dans la chaine radar de réception, en calculant la projection des déplacements attendus du centre de phase émission O1 sur la direction de pointage de la première antenne d'émission et la projection des déplacements attendus du centre de phase Im réception O2 sur la direction de pointage de la deuxième antenne de réception ; puis en déterminant un déphase de compensation Δ*ϕ* correspondant aux directions respective de pointage de la première antenne émission et de la deuxième antenne de réception en fonction des déplacements respectifs du centre de phase émission O1 et du centre de phase réception O2 et de la longueur d'onde *λ* du signal radar ;
- une étape d'apprentissage par axe de visée, est exécutée au sol ou en vol sur des balises fixes connues est mise en œuvre, l'étape d'apprentissage étant configurée pour fournir un modèle d'affinement des corrections à appliquer au niveau de la démodulation du ou des échos radar reçu(s) dans la chaîne radar de réception qui prend en compte les variations des vibrations corrélées avec le régime moteur et la vitesse de l'aéronef à voilure tournante ;
- le radar Doppler est un radar mono-statique comporte une antenne radar émission-réception avec un même centre de phase O ; et le système de neutralisation active comporte un premier sous-système de mesure et d'estimation des composantes du vecteur de déplacement attendu du centre de phase O de l'antenne émission-réception, incluant le capteur de vibrations tridimensionnel, et en série, un deuxième sous-système, de neutralisation d'un nombre entier N prédéterminé de déplacements attendus estimés du centre de phase O, associés à N directions de pointage en mode réception de l'antenne émission-réception, inclus dans le module de traitement du signal, démodulé et numérisé, de la chaîne réception ; et les modes vibratoires de l'antenne radar sont mesurés par le capteur de vibrations dans la première étape de mesure et d'extrapolation temporelle ; et les déplacements attendus du centre de phase O de l'antenne radar émission-réception sont estimés dans la deuxième étape; et la compensation des déplacements attendus du centre de phase de l'antenne émission-réception est effectuée au niveau du module de traitement du signal, démodulé et numérisé, de la chaîne réception, en calculant la projection des déplacements attendus du centre de phase O sur les N directions de pointage de l'antenne radar émission-réception, puis en déterminant pour chacune des N directions de pointage de l'antenne émission-réception en mode réception un déphasage de compensation Δ*ϕ* associé fonction de l'amplitude dp des déplacements attendus du centre de phase correspondant à la direction de pointage et la longueur d'onde *λ* de la porteuse du radar ;
- le radar Doppler est un radar bi-statique comportant une première antenne radar émission ayant un centre de phase émission O1 et une deuxième antenne radar réception, distante de la première antenne émission et ayant un centre de phase réception O2 ; et le système de neutralisation active comporte un premier sous-système de mesure et d'estimation des composantes du vecteur de déplacement attendu du centre de phase O1 de l'antenne émission et des composantes du vecteur de déplacement attendu du centre de phase O2 de l'antenne réception, incluant les premier et deuxième capteurs de vibrations tridimensionnel, et en série, un deuxième sous-système, de neutralisation d'un nombre entier N prédéterminé de déplacements attendus estimés du centre de phase réception O2, associés à N directions de pointage en mode réception de l'antenne réception et des déplacements attendus estimés du centre de phase émission O1 associés à la direction de pointage en mode émission de l'antenne émission, inclus dans le module de traitement du signal, démodulé et numérisé, de la chaîne réception ; et les modes vibratoires de la première antenne radar émission, respectivement de la deuxième antenne radar réception sont mesurés, dans la première étape de mesure et d'extrapolation temporelle, par le premier capteur de vibrations, respectivement le deuxième capteur de vibrations ; et les déplacements attendus du centre de phase émission O1 de la première antenne radar émission et les déplacements attendus du centre de phase réception O2 de la deuxième antenne radar réception sont estimés dans le deuxième étape ; et la compensation des déplacements attendus du centre de phase émission O1 et du centre de phase réception O2 est effectuée au niveau du module de traitement du signal, démodulé et numérisé, de la chaîne réception, en calculant la projection des déplacements attendus du centre de phase émission O1 sur la direction de pointage émission de la première antenne d'émission et la projection des déplacements attendus du centre de phase réception O2 sur les N directions de pointage de la deuxième antenne de réception; puis en déterminant pour chacune des N directions de pointage de l'antenne émission-réception en mode réception un déphasage de compensation Δ*ϕ* associé fonction de l'amplitude dp des déplacements attendus du centre de phase réception O2 correspondant à la direction de pointage, de l'amplitude des déplacements attendus du centre de phase émission O1, et de la longueur d'onde *λ* de la porteuse du radar ;
- une étape d'apprentissage par axe de visée, est exécutée au sol ou en vol sur des balises fixes connues est mise en œuvre, l'étape d'apprentissage étant configurée pour fournir un modèle d'affinement des corrections à appliquer au niveau du module de traitement du signal, de la chaîne réception du ou des échos radar reçu(s) dans la chaîne radar de réception qui prend en compte les variations des vibrations corrélées avec le régime moteur et la vitesse de l'aéronef à voilure tournante.

L'invention a également pour objet un système de neutralisation active de l'effet des vibrations d'un aéronef à voilure tournante pour un radar Doppler radar Doppler mono-statique, ou un radar bi-statique ;
le radar Doppler mono-statique comportant : une antenne radar émission-réception partageant un même centre de phase O, et une chaîne radar d'émission, connectée à une entrée émission de l'antenne émission-réception du radar mono-statique; et une chaîne radar de réception, connectée à une sortie réception de l'antenne émission-réception du radar mono-statique ; ou le radar Doppler bi-statique comportant : une première antenne radar émission ayant un centre de phase émission O1 et une deuxième antenne radar réception, distante de la première antenne émission, ayant un centre de phase réception O2 ; et une chaîne radar d'émission, connectée à une entrée émission de la première antenne radar émission) du radar bi-statique ; et une chaine radar de réception, connectée à une sortie réception de la deuxième antenne radar de réception du radar bi-statique.

Le système de neutralisation active de l'effet des vibrations d'un aéronef à voilure tournante pour un radar Doppler mono-statique, ou un radar bi-statique est caractérisé en ce qu'il comporte : un capteur de vibrations tridimensionnel par antenne radar, solidaire de ladite antenne et poche de son centre de phase O, O1 et O2 ; et un dispositif d'estimation du déplacement de chaque capteur de vibration et de neutralisation de leur déplacement ; l'au moins un capteur(s) de vibrations et le dispositif d'estimation des déplacements de chaque capteur de vibrations et de neutralisation de leur déplacement étant configurés pour :
- dans une première étape, mesurer et d'extrapoler temporellement des modes vibratoires au niveau de l'antenne émission-réception ou de la première antenne émission et de la deuxième antenne réception près de leur(s) centre(s) de phase associé(s) ; puis
- dans une deuxième étape estimer des déplacements attendus de l'antenne d'émission-réception ou de la première antenne émission et de la deuxième antenne réception ; puis
- dans une troisième étape compenser les déplacements attendus de la ou des antennes radar au niveau de la chaine émission ou de la chaine réception.

Suivant des modes particuliers de réalisation, le système de neutralisation active de l'effet des vibrations d'un aéronef à voilure tournante pour un radar Doppler aéroporté comporte l'une ou plusieurs des caractéristiques suivantes, prises isolément ou en combinaison :
- le dispositif d'estimation des déplacements de chaque capteur de vibrations et de neutralisation de leur déplacement est configuré, lors de la troisième étape de compensation des déplacements attendus, pour : calculer au moins une projection des déplacements attendus sur une direction de pointage de l'antenne émission-réception ou de la deuxième antenne de réception, et ensuite déterminer au moins un déphasage de compensation au niveau de la chaine émission ou de la chaine réception correspondant à une direction de pointage ;
- le dispositif d'estimation des déplacements de chaque capteur de vibrations et de neutralisation de leur déplacement est configuré pour : lors de la première étape de mesure et d'extrapolation temporelle des modes vibratoires d'un capteur de vibrations, mettre en œuvre un filtrage passe-bande de signaux d'accélérations triaxiales mesurées, puis une analyse fréquentielle complexe des modes vibratoires ensuite une interpolation des profils d'accélération par filtrage des bandes images, puis une extrapolation temporelle à des instants immédiatement suivants les accélérations interpolées ; et lors de la deuxième étape d'estimation des déplacements attendus, mettre en œuvre une intégration des accélérations attendues en des vitesses attendues, puis une intégration des vitesses attendues en des déplacements attendus ;
- le dispositif d'estimation des déplacements de chaque capteur de vibrations et de neutralisation de leur déplacement est configuré en outre pour mette en œuvre une étape d'apprentissage par axe de visée, exécutée au sol ou en vol sur des balises fixes connues, dans laquelle est élaboré un modèle d'affinement des corrections à appliquer au niveau de la chaine radar d'émission ou au niveau de la chaine radar de réception, qui prend en compte les variations des vibrations corrélées avec le régime moteur et la vitesse de l'aéronef à voilure tournante.

L'invention sera mieux comprise à la lecture de la description de plusieurs formes de réalisation qui va suivre, donnée uniquement à titre d'exemple et faite en se référant aux dessins sur lesquels :
- la Figure 1 est une vue des mouvements vibratoires du centre de phase autour du point de repos ;
- la Figure 2 est une vue de la direction de pointage de l'antenne, projetée dans le repère de l'antenne ;
- la Figure 3 est une vue de l'architecture d'un radar Doppler aéroporté mono-statique dans lequel est intégré un système de neutralisation active des vibrations selon une première forme de réalisation de l'invention ;
- la Figure 4 est une vue d'un ordinogramme d'un procédé de neutralisation active de l'effet des vibrations d'un aéronef à voilure tournante selon un premier mode de réalisation de l'invention mis en œuvre par le système de neutralisation active des vibrations décrit dans la Figure 3 ;
- la Figure 5 est une vue de l'architecture d'un radar Doppler aéroporté bi-statique dans lequel est intégré un système de neutralisation active des vibrations selon une variante de la première forme de réalisation de la Figure 3 ;
- la Figure 6 est une vue d'un bloc de modélisation des corrections de phase du signal du radar Doppler, affinées par rapport à la prise en compte du régime moteur et de la vitesse de l'aéronef, la modélisation étant élaborée au cours d'une étape d'apprentissage ;
- la Figure 7 est une vue de l'architecture d'un radar Doppler aéroporté mono-statique dans laquelle est intégrée un système selon une deuxième forme de réalisation de l'invention ;
- la Figure 8 est une vue d'un ordinogramme d'un procédé de neutralisation active de l'effet des vibrations d'un aéronef à voilure tournante selon un deuxième mode de réalisation de l'invention mis en œuvre par le système de neutralisation active des vibrations décrit dans la Figure 7 ;
- la Figure 9 est une vue de l'architecture d'un radar Doppler aéroporté mono-statique dans laquelle est intégrée un système selon une troisième forme de réalisation de l'invention ;
- la Figure 10 est une vue d'un ordinogramme d'un procédé de neutralisation active de l'effet des vibrations d'un aéronef à voilure tournante selon un troisième mode de réalisation de l'invention mis en œuvre par le système de neutralisation active des vibrations décrit dans la Figure 9.

De manière générale, un procédé de neutralisation active de l'effet des vibrations d'un aéronef à voilure tournante est fondé sur la mesure des mouvements vibratoires de l'antenne radar, réalisée par un accéléromètre 3-axes mécaniquement solidaire de l'antenne radar et proche de son centre de phase.

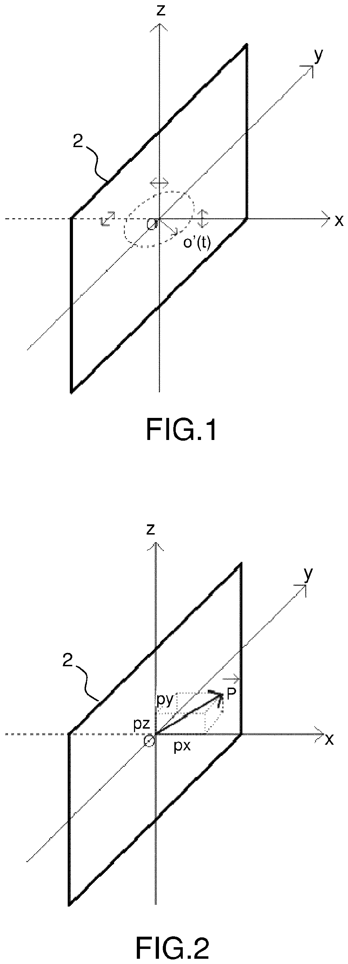

Comme illustré sur la Figure 1, les déplacements du centre de phase d'une antenne radar 2, représentée de manière simplifiée, sont établis (vecteur *̅0̅0̅*̅'̅(t), à partir des composantes en accélération.

L'effet Doppler est sensible aux mouvements radiaux par rapport à la direction de pointage de l'antenne. Dans le cas d'une antenne active, cette direction *̅O̅P̅*̅ n'est pas nécessairement alignée avec la normale de l'antenne, comme représentée sur la Figure 2.

Les différentes composantes des déplacements vibratoires sont projetées sur la direction de pointage donnée par le vecteur *̅O̅P̅*̅ , par produit scalaire *O̅O̅'̅.O̅P̅.*

Selon l'invention, ces déplacements radiaux par rapport à la direction de pointage *̅O̅P̅*̅ sont traduits en déphasage Δ*φ* relativement à la longueur d'onde *λ* de la porteuse.

De manière générale, le déphasage Δ*φ* correspondant est alors compensé au niveau de la chaine radar émission Tx ou de la chaine radar réception Rx.

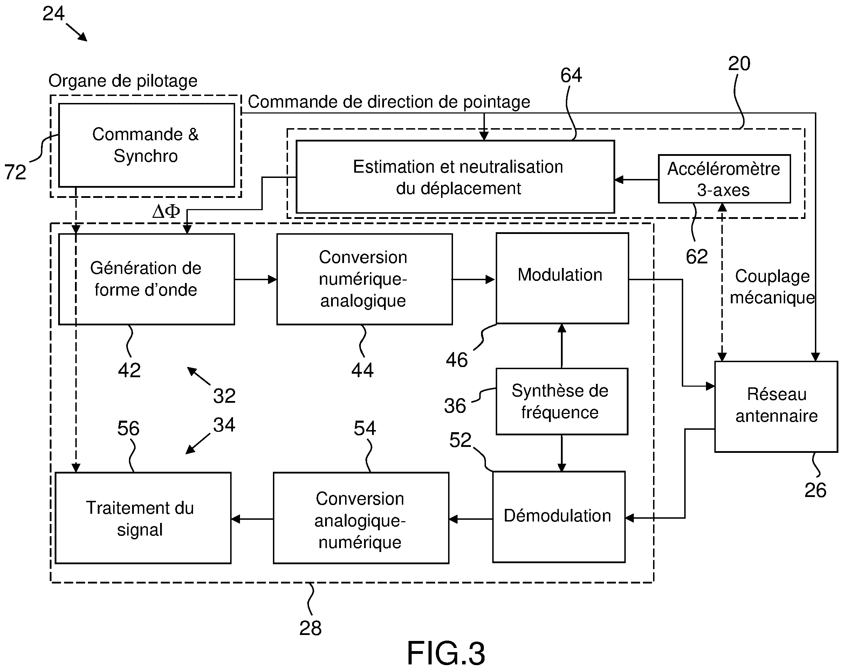

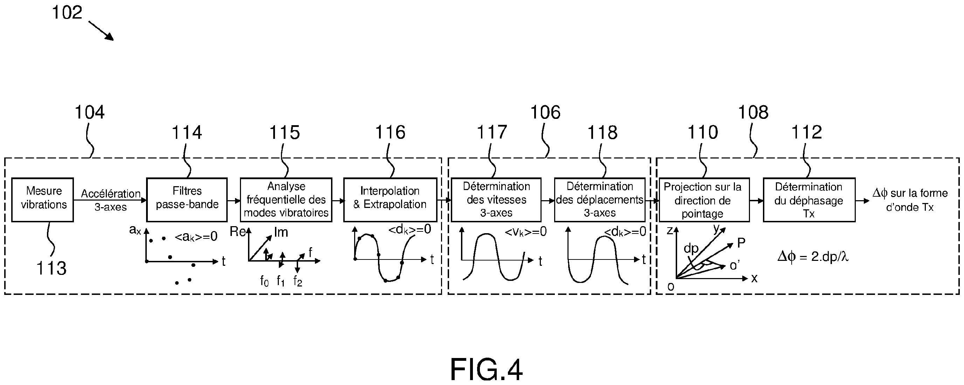

Suivant les Figures 3 et 4 et un premier mode de réalisation, le déphasage correspondant Δ*φ* est alors compensé au niveau de la génération de la forme d'onde dans la chaine émission Tx, en prenant en compte le chemin aller-retour du signal et en considérant l'antenne immobile pendant ce temps d'aller-retour. Ainsi, pour une direction de pointage *̅O̅P̅*̅ donnée, l'effet Doppler induit par les vibrations est neutralisé en amont de la génération de signal. Aucun traitement supplémentaire ne sera nécessaire à la réception du signal.

Suivant la Figure 3 et un premier mode de réalisation, un système de neutralisation active 20 de l'effet des vibrations d'un aéronef à voilure tournante (non représenté) pour un radar Doppler aéroporté est intégré ici dans un radar Doppler mono-statique 24.

Le radar Doppler mono-statique 24 comporte une antenne radar émission-réception 26, ici sous la forme d'un réseau antennaire, ayant un même centre de phase, et comporte un émetteur-récepteur radar 28, raccordé à ladite antenne radar émission-réception 26.

L'émetteur-récepteur radar 28 comporte une chaine radar d'émission 30 et une chaine radar de réception 32 qui partagent une unité de synthèse de fréquence 34 lors de la transposition du signal radar sur sa porteuse en mode émission ou de la conversion des échos radar dans une bande analytique de traitement.

La chaîne radar d'émission 30 comporte, connectés en série, un module de génération numérique 42 de la forme d'onde émission Tx, un convertisseur numérique-analogique CNA 44, et un modulateur 46 du signal radar sur sa porteuse émission Tx à la longueur d'onde *λ*, la sortie du modulateur 46 étant connectée à une borne d'entrée de l'antenne radar émission-réception 26.

La chaîne radar de réception 32 comporte, connectés en série, un démodulateur 52 des échos radar reçus à travers l'antenne émission réception 26, un convertisseur analogique-numérique CAN 54 et un module de traitement du signal 56 dans une bande de traitement analytique.

Le système de neutralisation active 20 comporte ici un capteur de vibrations tridimensionnel 62, solidaire de l'antenne radar émission-réception 26 et proche du centre de phase O de ladite antenne 26, et un dispositif 64 d'estimation du déplacement du centre de phase O de l'antenne radar émission-réception 26 et de neutralisation dudit déplacement au niveau de la génération de la forme d'onde radar d'émission Tx.

Le radar 24 comporte également un organe de pilotage 72 du radar, configuré pour commander et synchroniser les différentes tâches du radar, et en particulier envoyer une commande de direction de pointage à l'antenne radar émission-réception 26 et au dispositif 64 d'estimation du déplacement du centre de phase O de l'antenne radar émission-réception 26 et de neutralisation dudit déplacement.

Suivant la Figure 4 et le premier mode de réalisation, le procédé de neutralisation active 102 de l'effet des vibrations d'un aéronef à voilure tournante pour un radar Doppler est mis en œuvre par le système de neutralisation active 20 de l'effet des vibrations de l'aéronef, et comporte, exécutées successivement :
- une première étape 104 de mesure et d'extrapolation temporelle des modes de vibrations au niveau de l'antenne émission-réception près de son centre de phase ;
- une deuxième étape d'estimation 106 des déplacements attendus du centre de phase O de l'antenne radar émission-réception ;
- une troisième étape 108 de compensation des déplacements attendus du centre de phase de l'antenne émission par rapport à une direction de pointage donnée, effectuée au niveau de la génération de la forme d'onde émission Tx dans la chaine radar d'émission 32, en calculant (quatrième étape 110) la projection des déplacements attendus du centre de phase sur la direction de pointage donné de l'antenne radar émission réception, puis en déterminant (cinquième étape 112) un déphasage de compensation Δ*φ* correspondant à la direction de pointage égal à deux fois l'amplitude dp des déplacements attendus divisée par la longueur d'onde *λ* du radar.

La première étape 104 consiste à mesurer 113 des accélérations d'un point proche du centre de phase O de l'antenne émission-réception par le capteur de vibrations, puis à isoler 114 les composantes vibratoires dans le spectre des différents déplacements, par le biais de filtres passe-bande sélectionnant les fréquences fondamentales et les harmoniques des vibrations causées par les rotors de l'aéronef. Ensuite, à partir des mesures échantillonnées et filtrées, une analyse fréquentielle est menée 115 pour obtenir les composantes spectrales complexes des mouvements vibratoires, selon les trois axes X, Y, Z de l'antenne émission-réception. Cette analyse permet d'obtenir une interpolation 116 des profils d'accélération par filtrage des bandes images. Cela permet également d'extrapoler 116 la suite de ces profils aux instants immédiatement suivants, en prenant pour hypothèse des mouvements localement périodiques.

Dans la deuxième étape 106, les profils de vitesses vx, vy, vz selon les trois axes X, Y, Z sont obtenus par intégration 117 des accélérations ax, ay, az. Les composantes de vitesses vx, vy, vz, correspondant aux vibrations sont supposées périodiques et de moyenne nulle. Cette hypothèse permet de déterminer la vitesse initiale qui apparait lors de l'intégration de l'accélération. De la même manière, une intégration supplémentaire 118 permet d'obtenir les profils de déplacement px, py, pz selon les trois axes X, Y, Z, par rapport au point de repos.

Dans la quatrième étape 110, le vecteur de déplacement instantané *̅d̅p̅*̅ du centre de phase O est projeté sur la direction de pointage *̅O̅P̅*̅ de l'antenne émission par produit scalaire *d̅p̅.O̅P̅.* Le déplacement résultant dp est converti en déphasage correctif Δ*φ* à appliquer lors de la synthèse numérique de la forme d'onde radar émise.

L'extrapolation des accélérations et in fine des déplacements de l'antenne associés aux vibrations permet ainsi d'anticiper la position du centre de phase O de l'antenne émission réception au moment où la forme d'onde sera émise et ainsi d'appliquer le déphasage Δ*φ* lors de la synthèse de la forme d'onde qui précède l'émission.

Dans le cas d'un radar Doppler bi-statique, un accéléromètre 3-axes peut être disposé pour mesurer le centre de phase de chacune des antennes. Le calcul du déphasage de compensation à l'émission se fait alors sur la base des déplacements respectifs des antennes.

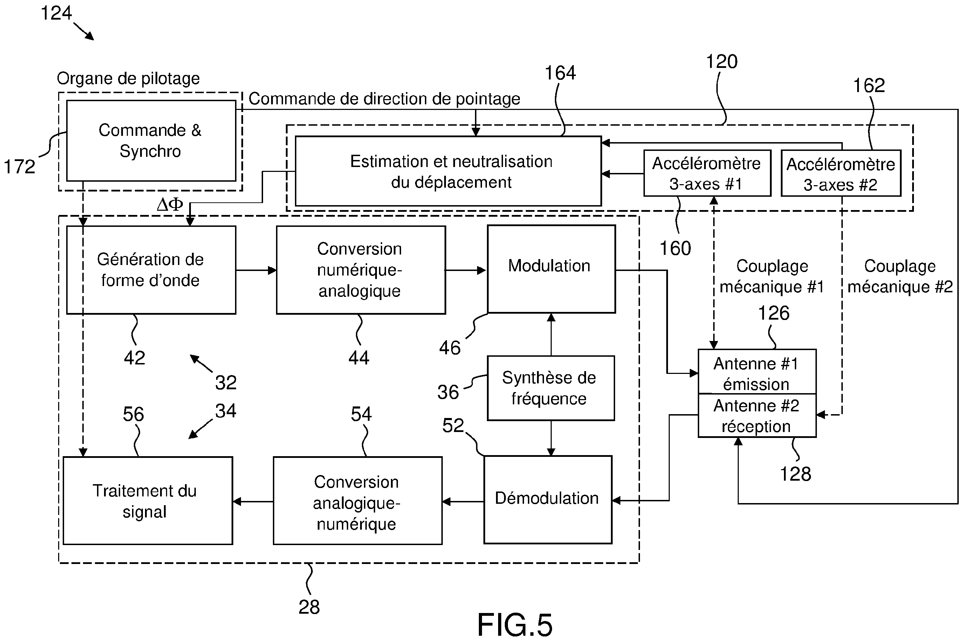

Suivant la Figure 5 et une variante de la première forme de réalisation du système et du procédé de neutralisation active des Figures 3 et 4, un système de neutralisation active 120 de l'effet des vibrations à voilure pour un radar Doppler, dérivé du système de neutralisation active 20, est configuré pour être intégré avec un radar Doppler aéroporté bi-statique 124.

Le radar Doppler bi-statique 124 diffère du radar Doppler mono-statique 24 en ce qu'il comporte une première antenne radar émission 126 ayant un premier centre de phase émission O1 et une deuxième antenne radar réception 128 ayant un deuxième centre de phase O2.

Le premier système de neutralisation active 120 diffère du système de neutralisation active 20 de la Figure 3 en ce qu'il comporte deux capteurs de vibrations au lieu d'un seul, à raison d'un capteur de vibrations par antenne.

Le système de neutralisation active 120 comporte un premier capteur de vibrations tridimensionnel 160, solidaire de la première antenne radar d'émission par un premier couplage mécanique rigide et proche de son centre de phase émission 01, et comporte un deuxième capteur de vibrations tridimensionnel 162, solidaire de la deuxième antenne radar de réception 128 par un deuxième couplage mécanique rigide et proche de son centre de phase réception O2.

Le système de neutralisation active 120 diffère également du système de neutralisation active 20 de la Figure 3 en ce qu'il comporte un dispositif d'estimation et de neutralisation des déplacements respectifs du premier centre de phase émission O1 de la première antenne radar émission 126 et du deuxième centre de phase O2 de la deuxième antenne radar réception 128.

Le système de neutralisation active 120 pour mettre en œuvre les première et deuxième étapes appliquées à chaque antenne.

Les modes vibratoires de la première antenne radar émission 126, respectivement de la deuxième antenne radar réception 128 sont mesurés par le premier capteur de vibrations 160, respectivement le deuxième capteur de vibrations et extrapolés 162, et extrapolés temporellement.

Les déplacements attendus du premier centre de phase émission O1 de la première antenne radar émission 126 et les déplacements attendus du deuxième centre de phase réception O2 de la deuxième antenne radar réception 128 sont estimés par le dispositif d'estimation et de neutralisation 164 des déplacements respectifs des premier et deuxième centres de phase O1, O2 en utilisant l'algorithme de la deuxième étape de la Figure 4.

La compensation des déplacements attendus du premier centre de phase émission O1 et du deuxième centre de phase réception O2 est effectuée au niveau de la génération de la forme d'onde dans la chaine radar d'émission à l'aide du dispositif d'estimation et de neutralisation 164 des déplacements :
en calculant la projection des déplacements attendus du premier centre de phase émission O1 sur la direction de pointage de la première antenne d'émission 126 et la projection des déplacements attendus du deuxième centre de phase réception O2 sur la direction de pointage de la deuxième antenne de réception 128 ; puis
en déterminant un déphasage de compensation Δ*φ* correspondant aux directions respective de pointage de la première antenne émission 126 et de la deuxième antenne de réception 128 en fonction des déplacements respectifs du premier centre de phase émission O1 et du deuxième centre de phase réception O2 et de la longueur d'onde À de la porteuse du signal radar.

Il est à remarquer que le radar Doppler bi-statique 124 comporte un organe de pilotage 172, adapté à un radar Doppler bi-statique, configuré pour commander et synchroniser les différentes tâches du radar bi-statique 124, et en particulier envoyer une commande des directions respectives de pointage à la première antenne radar émission 126, à la deuxième antenne réception 128, et au dispositif 164 d'estimation des déplacements respectifs attendus du premier centre de phase émission O1 de la première antenne radar émission 126 et du deuxième centre de phase O2 de la deuxième antenne réception 128, et de neutralisation desdits déplacements.

Il est à remarquer qu'un système de neutralisation utilisant deux capteurs de vibration comme le système de neutralisation 120 décrit dans la Figure 5 peut être utilisé pour n'importe quelle forme de radar bi-statique. La forme la plus générale d'un radar bi-statique, dénommée « fortement bi-statique », est celle d'un radar bi-statique dans laquelle les antennes émission et réception sont physiquement séparées et assez éloignées et/ou faiblement couplées mécaniquement, et nécessitent chacune l'utilisation d'un capteur de vibrations 3D différent. La forme particulière d'un radar bi-statique, dénommée « faiblement bi-statique », est celle d'un radar bi-statique dans laquelle les antennes émission et réception sont physiquement séparées mais proches par leur centre de phase respectif et fortement couplées mécaniquement. Cette forme de réalisation, dite « faiblement bi-statique », peut utiliser de manière partagée un seul capteur de vibration 3D, disposée proche de l'un ou l'autre des centres, et fonctionner de manière similaire à celle d'un radar mono-statique s'agissant de la fonction de neutralisation des effets des vibrations de l'aéronef.

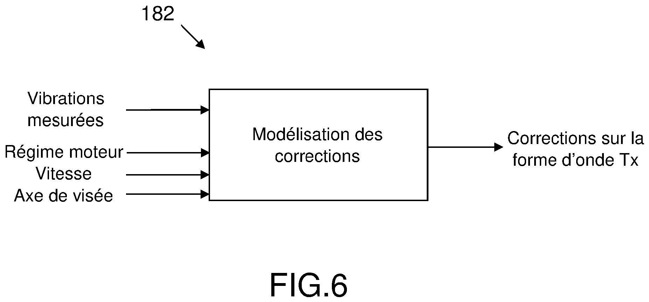

Suivant la Figure 6, un système d'apprentissage 182 par axe de visée peut être implémenté et intégré aux systèmes de neutralisation active 20, 120 des Figures 3 et 5 pour prendre en compte les variations des vibrations de l'aéronef, en intégrant le régime moteur de l'aéronef à voilure tournante, qui sont corrélés avec la vitesse du porteur. Un affinage continu peut ainsi être effectué pour améliorer les mesures des capteurs de vibrations.

Lorsqu'elle est mise en œuvre, cette modélisation permet de diminuer les besoins en qualité des capteurs accéléromètres.

Ainsi, un capteur de faible performance peut être utilisé et amélioré par la mise en œuvre de cette fonction d'apprentissage au travers d'une étape d'apprentissage.

La fonction d'apprentissage peut se faire au sol ou en vol sur des balises fixes connues. Ce peut être des balises à faux doppler de fréquence très proche de la porteuse. Cet apprentissage pourra se faire à différents régime moteur pour permettre une annulation optimale des vibrations.

Le système et le procédé de neutralisation active, décrits dans les Figures 3 à 5, peuvent être utilisés dans le cadre des contre-contre-mesures (CCM). La compensation des vibrations des antennes radar étant effectuée à l'émission, les échos reçus par le radar sont corrélés avec les déplacements des antennes et sont automatiquement compensés. A contrario, les signaux reçus provenant de brouilleurs ne sont pas corrélés avec ces vibrations. L'effet des vibrations apparaitra donc pour ces signaux brouilleurs à l'issue du traitement Doppler, ce qui permet de les identifier en tant que brouilleur.

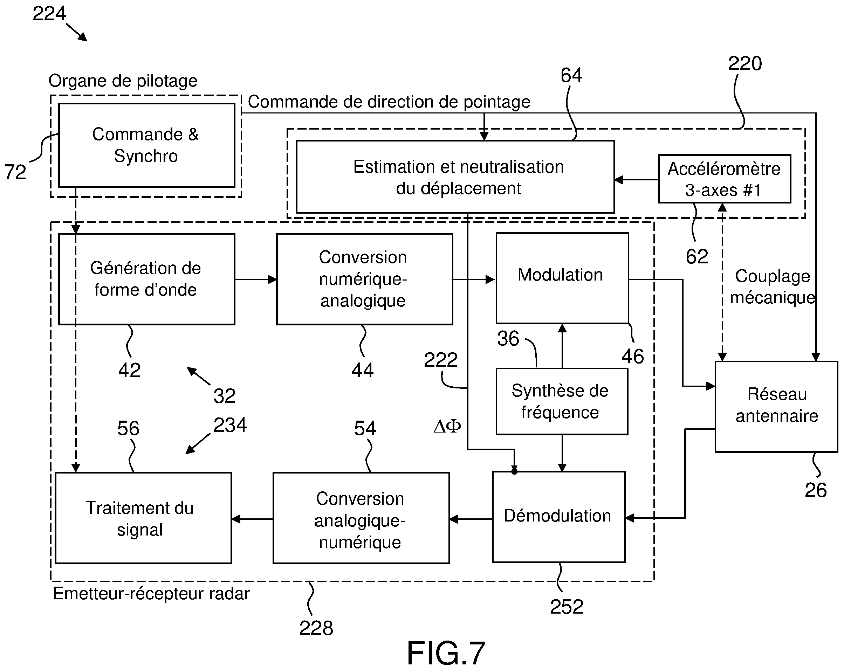

Suivant la Figure 7 et un deuxième mode de réalisation, un système de neutralisation active 220 de l'effet des vibrations d'un aéronef à voilure tournante pour radar Doppler est intégré dans un radar Doppler mono-statique 224 en étant implémenté au niveau de la chaîne de réception 234 du radar 224 et non au niveau de la chaîne d'émission comme cela est décrit pour le radar Doppler 24 de la Figure 3.

Le système de neutralisation active 220 présente une architecture interne identique à celle du système de neutralisation active 20 de la Figure 3 en comportant le même dispositif d'estimation et neutralisation du déplacement 64 et le même capteur de vibrations 62.

Le système de neutralisation active 220 diffère du système de neutralisation 20 de la Figure 3 en ce qu'il comporte une liaison de sortie 222 du dispositif d'estimation et neutralisation du déplacement 64, connectée au démodulateur 252 de la chaine réception 234 du radar 224.

Le radar Doppler mono-statique 224, qui intègre le système de neutralisation active 220, comporte un émetteur-récepteur 222 qui diffère de celui de la Figure 3 en ce que dans sa chaine de réception 234, le démodulateur 252 comporte une entrée supplémentaire 254 pour recevoir le signal de compensation Δ*φ* transmis par le dispositif d'estimation et de neutralisation 64 du déplacement du centre de phase O de l'antenne d'émission-réception 26.

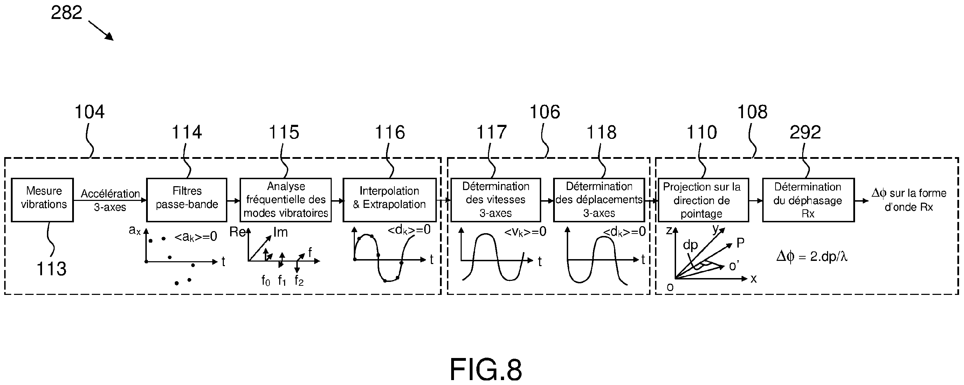

Suivant la Figure 8, le procédé de neutralisation active 232, mis en œuvre par le système de neutralisation active 220 de la Figure 6, reste le même que le procédé de neutralisation active 102 de la Figure 4 dans sa chaine d'étapes 113, 114, 115, 116, 117, 118, 110 qui conduisent à la détermination du déphasage de compensation Δ*φ* mais en diffère par l'étape de détermination du déphasage de compensation au niveau réception Rx 292 qui remplace l'étape de détermination du déphasage de compensation au niveau émission Tx 112.

Dans la cinquième étape de détermination du déphasage de compensation au niveau réception Rx 292, le signal de compensation Δ*φ* au niveau réception Rx est calculé de la même manière que dans la cinquième étape 112 de la Figure 4, mais est transmis au démodulateur 252 dans la chaine de réception 234 et appliqué au niveau du démodulateur.

Il est à remarquer qu'à l'instar de la variante du premier mode de réalisation du procédé et du système de neutralisation active, une variante du deuxième mode de réalisation, applicable à un radar Doppler bi-statique au lieu d'un radar Doppler mono-statique, peut être envisagée. Dans cette variante qui s'applique à un radar Doppler bi-statique, un accéléromètre 3-axes peut être disposé pour mesurer le centre de phase de chacune des deux antennes émission et réception. Le calcul du déphasage de compensation à la réception au niveau du démodulateur se fait alors sur la base des déplacements respectifs des antennes émission et réception.

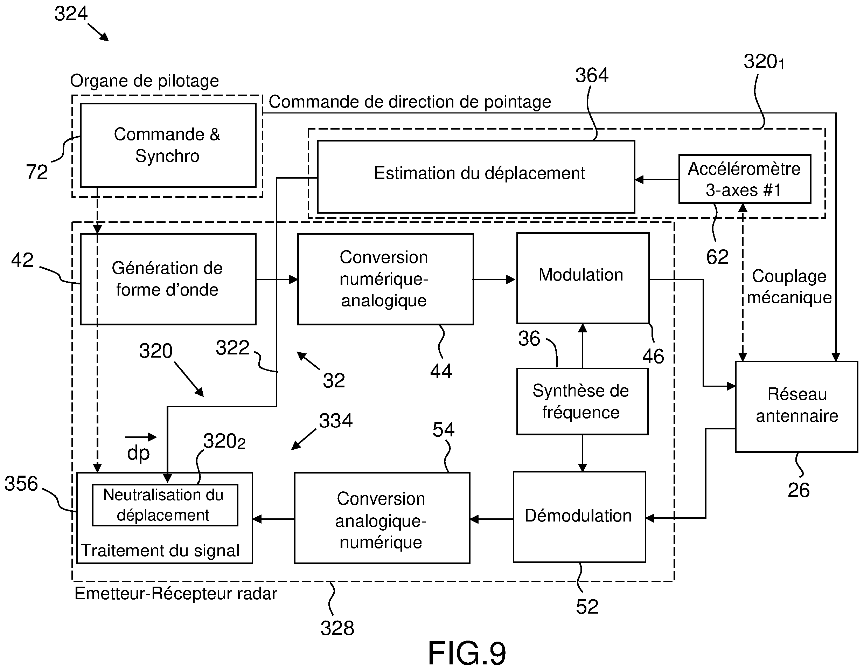

Suivant la Figure 9 et un troisième mode de réalisation, un système de neutralisation active 320 de l'effet des vibrations d'un aéronef à voilure tournante pour radar Doppler, formé de deux sous-systèmes 320₁ et 320₂ connectés en série, est intégré dans un radar Doppler mono-statique 324 en étant implémenté au niveau du module de traitement du signal radar numérique Rx 356 de la chaîne de réception 234 du radar Doppler 224 et non au niveau du démodulateur 252 de la chaîne de réception 234 comme cela est décrit pour le radar Doppler 224 de la Figure 7.

Le système de neutralisation active 320 se décompose ainsi en un premier sous-système 320₁ de mesure et d'estimation des composantes px, py, pz du vecteur déplacement attendu *̅d̅p̅*̅ du centre de phase O de l'antenne émission-réception 26 et un deuxième sous-système 320₂ de neutralisation de N déplacements attendus estimés dp(j) associés à N directions différentes de pointage de l'antenne de réception, N étant un entier prédéterminé.

Le premier sous-système 320₁ d'estimation du vecteur déplacement *̅d̅p̅*̅ du centre de phase O de l'antenne émission-réception 26 est connecté en sa sortie 322 à une entrée 324 du deuxième sous-système 320₂ de neutralisation par une liaison 326, interne au niveau de l'émetteur-récepteur 328.

Le deuxième sous-système 320₂ de neutralisation est inclus dans le module de traitement du signal radar numérique 356 de la chaine de réception et interposé entre une unité de traitement du signal amont, suivie d'une unité de tri des signaux par direction d'arrivée et connectée à l'unité CAN 54, et une unité de traitement de signal aval, les unités internes au module de traitement du signal radar numérique 356, n'étant pas représentées par souci de simplification.

Le premier sous-système 320₁ de mesure et d'estimation des composantes px, py, pz du vecteur déplacement attendu *̅d̅p̅*̅ du centre de phase O présente une architecture interne identique à celle du système de neutralisation active 220 de la Figure 7 en comportant la même portion, désignée par la référence numérique 364, du dispositif d'estimation et neutralisation du déplacement 64, dévolue aux étapes d'estimation des composantes px, py, pz du vecteur déplacement *̅d̅p̅*̅ dans le référentiel de l'antenne émission-réception 26, et le même capteur de vibrations 62.

Le système de neutralisation active 320 diffère du système de neutralisation 220 de la Figure 7 en ce qu'il est composé d'un premier sous-système d'estimation 320₁ du vecteur déplacement attendu *̅d̅p̅*̅ du centre de phase O et d'un sous-système de neutralisation 320₂, interconnectés entre eux par une liaison interne au niveau de l'émetteur-récepteur 328.

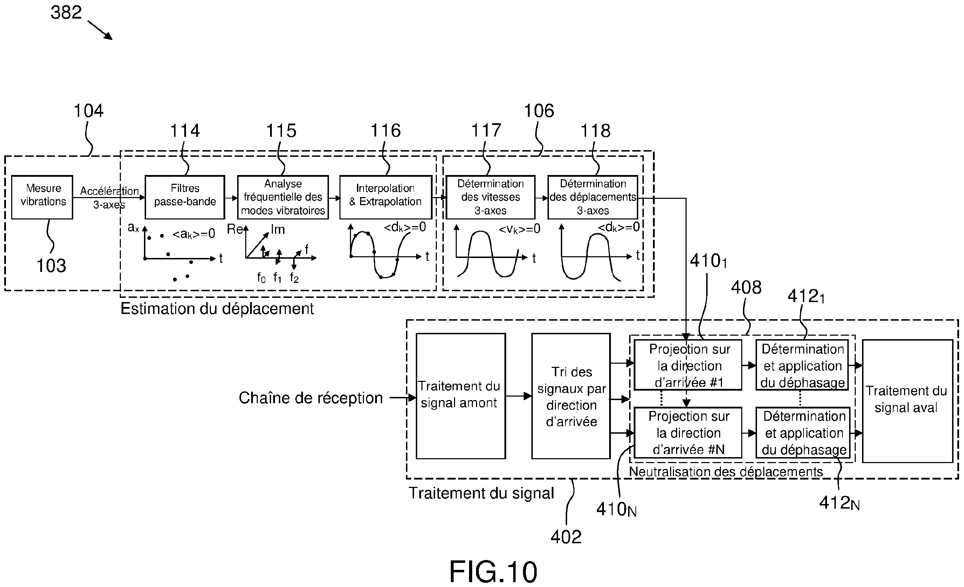

Suivant la Figure 10, le procédé de neutralisation active 382, mis en œuvre par le système de neutralisation active 320 de la Figure 9, reste le même que le procédé de neutralisation active 102 de la Figure 4 dans sa chaine d'étapes 113, 114, 115, 116, 117, 118 qui conduisent à la détermination des composantes px, py, pz du vecteur déplacement *̅d̅p̅*̅ du centre de phase O dans le repère de référence de l'antenne au repos X, Y, Z, mais en diffère en ce que la neutralisation étant située au niveau du traitement numérique, il est possible de projeter le vecteur de déplacement sur plusieurs directions de pointage par des traitements effectués en parallèle 410₁, ..., 410_{N} correspondant à la quatrième étape. Cela présente l'avantage de pouvoir compenser ensuite dans les étapes 412₁, ..., 412_{N}, l'effet des vibrations dans plusieurs directions simultanément, ce qui est utile pour traiter signaux provenant d'antennes avec un diagramme de rayonnement large ou bien avec plusieurs lobes, comme des lobes de réseau par exemple. Cette technique fonctionne également dans le cas classique d'une antenne directive avec une seule direction d'arrivée (N égal à 1).

Il est à remarquer qu'à l'instar de la variante du premier mode de réalisation du procédé et du système de neutralisation active, une variante du deuxième mode de réalisation, applicable à un radar Doppler bi-statique au lieu d'un radar Doppler mono-statique, peut être envisagée. Dans cette variante qui s'applique à un radar Doppler bi-statique, un accéléromètre 3-axes peut être disposé pour mesurer le centre de phase de chacune des deux antennes émission et réception. Le calcul du déphasage de compensation à la réception au niveau du module de traitement numérique se fait alors sur la base des déplacements respectifs des antennes émission et réception.

Les divers modes de réalisation du procédé et du système de neutralisation active selon l'invention, décrits ci-dessus sont basés sur la mesure des vibrations au plus proche du centre de phase O de l'antenne émission-réception dans le cas d'un radar Doppler mono-statique, ou du centre de phase O1 de l'antenne émission et du centre de phase de réception dans le cas d'un radar bi-statique, La mesure de l'accélération selon 3 axes en translation par un ou deux capteurs de vibration permet d'établir et d'anticiper les déplacements du centre de phase O de l'antenne émission-réception dans le cas d'un radar Doppler mono-statique ou les déplacements respectifs du centre de phase émission O1 de l'antenne émission et du centre de phase O2 de l'antenne de réception dans le cas d'un radar Doppler bi-statique. L'injection des déphasages de compensation induits par ces déplacements au niveau de la génération de la forme d'onde radar à l'émission ou au niveau de la démodulation des échos radar à la réception ou au niveau du traitement numérique des échos radar reçus après la démodulation permet de neutraliser les effets des vibrations par anticipation.

Il est remarqué que l'homme du métier dispose d'autres méthodes d'interpolation, utilisant par exemple un polynôme compris dans l'ensemble formé par les polynômes de Lagrange, Gauss, Bessel, Stirling et Newton. L'interpolation peut être réalisée également en splines ou par l'utilisation d'un filtre de reconstruction de Shannon. Par ailleurs la personne du métier pourrait envisager naturellement de remplacer dans les Figures 4, 8 et 10 le bloc d'analyse fréquentielle et d'interpolation/extrapolation correspondant à un mode de réalisation de la première étape104 par un filtre de Kalman en première variante ou par un réseau de neurones en deuxième variante.

## Revendications

1. Procédé de neutralisation active de l'effet des vibrations d'un aéronef à voilure tournante pour un radar Doppler mono-statique (24), ou un radar bi-statique (124),
le radar Doppler mono-statique (24) comportant :
- une antenne radar émission-réception (26) partageant un même centre de phase O, et
- une chaîne radar d'émission (32), connectée à une entrée émission de l'antenne émission-réception du radar Doppler mono-statique ; et
- une chaîne radar de réception (34), connectée à une sortie réception de l'antenne émission-réception (26) du radar Doppler mono-statique,
ou le radar Doppler bi-statique (124) comportant :
- une première antenne radar émission (126) ayant un centre de phase émission O1 et une deuxième antenne radar réception (128), distante de la première antenne émission, ayant un centre de phase réception O2 ; et
- une chaîne radar d'émission (32), connectée à une entrée émission de la première antenne radar émission (126) du radar Doppler bi-statique ; et
- une chaine radar de réception (34), connectée à une sortie réception de la deuxième antenne radar réception (128) du radar bi-statique (124) ;
le procédé de neutralisation active étant mis en œuvre par un système de neutralisation active (20 ; 120) comportant :
un capteur de vibrations tridimensionnel (62 ; 160, 162) par antenne radar (26 ; 126, 128), solidaire de ladite antenne (26 ; 126, 128), et proche de son centre de phase, O, O1, O2, ou un unique capteur de vibrations tridimensionnel, partagé par la première antenne radar émission et la deuxième antenne radar réception et proche d'un centre de phase O1, O2 lorsque les antennes émission et réception sont proches et fortement couplées mécaniquement ; et
un dispositif (64 ; 164) d'estimation du déplacement de chaque capteur de vibration (62 ; 160, 162) et de neutralisation de leur déplacement,
le procédé de neutralisation active étant **caractérisé en ce qu'**il comporte :
- une première étape (104) de mesure et d'extrapolation temporelle des modes vibratoires au niveau de l'antenne émission-réception (26) ou de la première antenne émission (126) et de la deuxième antenne réception (128) près de leur(s) centre(s) de phase associé(s) O, O1 et O2 ; puis
- une deuxième étape (106) d'estimation des déplacements attendus de l'antenne d'émission-réception (26) ou de la première antenne émission (126) et de la deuxième antenne réception (128) ; puis
- une troisième étape (108) de compensation des déplacements attendus de la (26) ou des antennes radar (126, 128) au niveau de la chaine émission (32) ou de la chaine réception.

2. Procédé de neutralisation active selon la revendication 1, dans laquelle
la troisième étape (108) de compensation des déplacements attendus du ou des centres de phase O, O1, O2, comporte une quatrième étape (110) de calcul d'au moins une projection des déplacements sur une direction de pointage de l'antenne émission-réception ou de la deuxième antenne de réception et une cinquième étape (112) de détermination d'au moins un déphasage de compensation correspondant à une direction de pointage.

3. Procédé de neutralisation active selon l'une de revendications 1 à 2 dans lequel pour chaque capteur de mesure
la première étape (104) de mesure et d'extrapolation temporelle des modes vibratoires du capteur de vibration (62; 160, 162) comporte, exécutées successivement une sous-étape (114) de filtrage passe-bande de signaux d'accélérations triaxiales mesurées, une sous-étape (115) d'analyse fréquentielle complexe des modes vibratoires et une sous-étape (116) d'interpolation des profils d'accélération par filtrage des bandes images, et d'extrapolation temporelle à des instants immédiatement suivants ; et
la deuxième étape (106) d'estimation des déplacements attendus comporte, exécutées successivement, une sous-étape (117) d'intégration des accélérations en des vitesses, une sous-étape (118) d'intégration des vitesses en déplacements attendus.

4. Procédé de neutralisation active selon l'une des revendications 1 à 3, comportant en outre une étape d'apprentissage par axe de visée, exécutée au sol ou en vol sur des balises fixes connues, configurée pour fournir un modèle d'affinement des corrections à appliquer au niveau de la chaine radar d'émission ou au niveau de la chaine radar de réception, qui prend en compte les variations des vibrations corrélées avec le régime moteur et la vitesse de l'aéronef à voilure tournante.

5. Procédé de neutralisation active selon l'une quelconque des revendications 1 à 4 dans lequel
Le radar Doppler est un radar mono-statique comportant une antenne radar émission-réception avec un même centre de phase O, et
Le système de neutralisation active comporte un capteur de vibrations tridimensionnel, solidaire de l'antenne rada émission-réception et proche de son centre de phase ; et
Les modes vibratoires de l'antenne radar sont mesurés par le capteur de vibrations dans la première étape de mesure et d'extrapolation temporelle ; et
Les déplacements attendus du centre de phase O de l'antenne radar émission-réception (26) sont estimés dans la deuxième étape (106) ; et
La compensation des déplacements attendus du centre de phase O de l'antenne émission-réception est effectuée au niveau de la génération de la forme d'onde (42) dans la chaine radar d'émission (32),
en calculant (110) la projection des déplacements attendus du centre de phase O sur la direction de pointage de l'antenne radar émission-réception (26), puis en déterminant un déphasage de compensation Δ*ϕ* correspondant à la direction de pointage égal à deux fois l'amplitude dp des déplacements attendus divisée par la longueur d'onde *λ* du radar.

6. Procédé de neutralisation active selon l'une quelconque des revendications 1 à 4 dans lequel
le radar Doppler est un radar bi-statique (124) comportant une première antenne radar émission (126) ayant un centre de phase émission O1 et une deuxième antenne radar réception (128), distante de la première antenne émission (126) et ayant un centre de phase réception O2 ; et
le système de neutralisation active (120) comporte un premier capteur de vibrations tridimensionnel (160), solidaire de la première antenne radar émission (126) et proche de son centre de phase émission 01, et un deuxième capteur de vibrations tridimensionnel (162), solidaire de la deuxième antenne radar réception (128 à et proche de son centre de phase réception O2 ; et
les modes vibratoires de la première antenne radar émission (124),
respectivement de la deuxième antenne radar réception (126) sont mesurés, dans la première étape (104) de mesure et d'extrapolation temporelle, par le premier capteur de vibrations (160), respectivement le deuxième capteur de vibrations (162) ; et
Les déplacements attendus du centre de phase émission O1 de la première antenne radar émission (126) et les déplacements attendus du centre de phase réception O2 de la deuxième antenne radar réception (128) sont estimés dans la deuxième étape (106) ; et
La compensation des déplacements attendus du centre de phase émission O1 et du centre de phase réception O2 est effectuée au niveau de la génération de la forme d'onde (42) dans la chaine radar émission (32),
en calculant (110) la projection des déplacements attendus du centre de phase émission sur la direction de pointage de la première antenne d'émission et la projection des déplacements attendus du centre de phase Im réception sur la direction de pointage de la deuxième antenne de réception ; puis en déterminant (112) un déphasage de compensation Δ*ϕ* correspondant aux directions respective de pointage de la première antenne émission et de la deuxième antenne de réception en fonction des déplacements respectifs du centre de phase émission et du centre de phase réception et de la longueur d'onde *λ* du signal radar.

7. Procédé de neutralisation active selon la revendication 5 ou la revendication 6, dans lequel
une étape d'apprentissage par axe de visée, est exécutée au sol ou en vol sur des balises fixes connues est mise en œuvre, l'étape d'apprentissage étant configurée pour fournir un modèle d'affinement des corrections à appliquer au niveau de la génération de la forme d'onde dans la chaîne radar d'émission qui prend en compte les variations des vibrations corrélées avec le régime moteur et la vitesse de l'aéronef à voilure tournante.

8. Procédé de neutralisation active selon l'une des revendications 5 à 7, comprenant une étape de détection de signaux de brouilleurs non corrélés avec les vibrations de l'aéronef à voilure tournante, l'étape de détection des signaux des brouilleurs étant mise en œuvre parallèlement à la compensation des échos radar reçus, corrélés avec les déplacements de la ou des antennes.

9. Procédé de neutralisation active selon l'une quelconque des revendications 1 à 4 dans lequel
le radar Doppler est un radar mono-statique (224) comportant une antenne radar émission-réception (26) avec un même centre de phase O, et
le système de neutralisation active (220) comporte un capteur de vibrations tridimensionnel (62), solidaire de l'antenne radar émission-réception (26) et proche de son centre de phase O ; et
les modes vibratoires de l'antenne radar (26) sont mesurés par le capteur de vibrations (62) dans la première étape (104) de mesure et d'extrapolation temporelle ; et
les déplacements attendus du centre de phase de l'antenne radar émission-réception O sont estimés dans la deuxième étape (106) ; et
la compensation des déplacements attendus du centre de phase O de l'antenne émission-réception (26) est effectuée au niveau de la démodulation (252) du ou des échos radar reçus dans la chaine radar de réception (234),
en calculant (110) la projection des déplacements attendus du centre de phase O sur la direction de pointage de l'antenne radar émission-réception (26), puis en déterminant (292) un déphasage de compensation Δ*ϕ* correspondant à la direction de pointage égal à deux fois l'amplitude dp des déplacements attendus du centre de phase O correspondant à la direction de pointage diffusée par la longueur d'onde *λ* du signal radar.

10. Procédé de neutralisation active selon l'une quelconque des revendications 1 à 4 dans lequel
le radar Doppler est un radar bi-statique comportant une première antenne radar émission (124) ayant un centre de phase émission O1 et une deuxième antenne radar réception (126), distante de la première antenne émission (124) et ayant un centre de phase réception O2 ; et
le système de neutralisation active comporte un premier capteur de vibrations tridimensionnel (160), solidaire de la première antenne radar émission (124) et proche de son centre de phase émission 01, et un deuxième capteur de vibrations tridimensionnel (162), solidaire de la deuxième antenne radar réception (126) et proche de son centre de phase réception O2 ; et
les modes vibratoires de la première antenne radar émission, respectivement de la deuxième antenne radar réception sont mesurés, dans la première étape (104) de mesure et d'extrapolation temporelle, par le premier capteur de vibrations (162), respectivement le deuxième capteur de vibrations (164) ; et
les déplacements attendus du centre de phase émission de la première antenne radar émission et les déplacements attendus du centre de phase réception de la deuxième antenne radar réception sont estimés dans le deuxième étape (106) ; et la compensation des déplacements attendus du centre de phase émission et du centre de phase réception est effectuée au niveau de la démodulation (152) du ou des échos radar dans la chaine radar de réception (252),
en calculant la projection des déplacements attendus du centre de phase émission O1 sur la direction de pointage de la première antenne d'émission (124) et la projection des déplacements attendus du centre de phase Im réception O2 sur la direction de pointage de la deuxième antenne de réception (126) ; puis en déterminant un déphase de compensation Δ*ϕ* correspondant aux directions respective de pointage de la première antenne émission (124) et de la deuxième antenne de réception (126) en fonction des déplacements respectifs du centre de phase émission O1 et du centre de phase réception O2 et de la longueur d'onde *λ* du signal radar.

11. Procédé de neutralisation active selon la revendication 9 ou la revendication 10, dans lequel
une étape d'apprentissage par axe de visée, est exécutée au sol ou en vol sur des balises fixes connues est mise en œuvre, l'étape d'apprentissage étant configurée pour fournir un modèle d'affinement des corrections à appliquer au niveau de la démodulation du ou des échos radar reçu(s) dans la chaîne radar de réception qui prend en compte les variations des vibrations corrélées avec le régime moteur et la vitesse de l'aéronef à voilure tournante.

12. Procédé de neutralisation active selon l'une quelconque des revendications 1 à 4 dans lequel
Le radar Doppler est un radar mono-statique (324) comporte une antenne radar émission-réception (26) avec un même centre de phase O, et
le système de neutralisation active (320) comporte un premier sous-système (320₁) de mesure et d'estimation des composantes du vecteur de déplacement attendu du centre de phase O de l'antenne émission-réception (26), incluant le capteur de vibrations tridimensionnel (62), et en série, un deuxième sous-système (320₂) de neutralisation d'un nombre entier N prédéterminé de déplacements attendus estimés du centre de phase O, associés à N directions de pointage en mode réception de l'antenne émission-réception (26), inclus dans le module de traitement (356) du signal, démodulé et numérisé, de la chaîne réception (334) ; et
les modes vibratoires de l'antenne radar (26) sont mesurés par le capteur de vibrations (62) dans la première étape (104) de mesure et d'extrapolation temporelle ; et
les déplacements attendus du centre de phase O de l'antenne radar émission-réception (26) sont estimés dans la deuxième étape (106) ; et
la compensation des déplacements attendus du centre de phase de l'antenne émission-réception est effectuée au niveau du module de traitement (356) du signal, démodulé et numérisé, de la chaîne réception (334),
en calculant la projection des déplacements attendus du centre de phase O sur les N directions de pointage de l'antenne radar émission-réception, puis en déterminant pour chacune des N directions de pointage de l'antenne émission-réception en mode réception un déphasage de compensation Δ*ϕ* associé fonction de l'amplitude dp des déplacements attendus du centre de phase correspondant à la direction de pointage et la longueur d'onde *λ* de la porteuse du radar.

13. Procédé de neutralisation active selon l'une quelconque des revendications 1 à 4 dans lequel
le radar Doppler est un radar bi-statique comportant une première antenne radar émission (126) ayant un centre de phase émission O1 et une deuxième antenne radar réception (128), distante de la première antenne émission (126) et ayant un centre de phase réception O2 ; et
le système de neutralisation active (320) comporte un premier sous-système (320₁) de mesure et d'estimation des composantes du vecteur de déplacement attendu du centre de phase O1 de l'antenne émission(126) et des composantes du vecteur de déplacement attendu du centre de phase O2 de l'antenne réception (128), incluant les premier et deuxième capteurs de vibrations tridimensionnel (160, 162), et en série, un deuxième sous-système 320₂, de neutralisation d'un nombre entier N prédéterminé de déplacements attendus estimés du centre de phase réception O2, associés à N directions de pointage en mode réception de l'antenne réception (128) et des déplacements attendus estimés du centre de phase émission O1 associés à la direction de pointage en mode émission de l'antenne émission, inclus dans le module de traitement (356) du signal, démodulé et numérisé, de la chaîne réception (334) ; et
les modes vibratoires de la première antenne radar émission (126),
respectivement de la deuxième antenne radar réception (126) sont mesurés, dans la première étape (104) de mesure et d'extrapolation temporelle, par le premier capteur de vibrations, respectivement le deuxième capteur de vibrations ; et
les déplacements attendus du centre de phase émission O1 de la première antenne radar émission et les déplacements attendus du centre de phase réception O2 de la deuxième antenne radar réception sont estimés dans le deuxième étape (106) ; et
la compensation des déplacements attendus du centre de phase émission O1 et du centre de phase réception O2 est effectuée au niveau du module de traitement (356) du signal, démodulé et numérisé, de la chaîne réception (334),
en calculant la projection des déplacements attendus du centre de phase émission O1 sur la direction de pointage émission de la première antenne d'émission (126) et la projection des déplacements attendus du centre de phase réception O2 sur les N directions de pointage de la deuxième antenne de réception (128) ; puis
en déterminant pour chacune des N directions de pointage de l'antenne émission-réception en mode réception un déphasage de compensation Δ*ϕ* associé fonction de l'amplitude dp des déplacements attendus du centre de phase réception O2 correspondant à la direction de pointage, de l'amplitude des déplacements attendus du centre de phase émission O1, et de la longueur d'onde *λ* de la porteuse du radar.

14. Procédé de neutralisation active selon la revendication 9 ou la revendication 10, dans lequel
une étape d'apprentissage par axe de visée, est exécutée au sol ou en vol sur des balises fixes connues est mise e œuvre, l'étape d'apprentissage étant configurée pour fournir un modèle d'affinement des corrections à appliquer au niveau du module de traitement (356) du signal, de la chaîne réception (334) du ou des échos radar reçu(s) dans la chaîne radar de réception qui prend en compte les variations des vibrations corrélées avec le régime moteur et la vitesse de l'aéronef à voilure tournante.

15. Système de neutralisation active de l'effet des vibrations d'un aéronef à voilure tournante pour un radar Doppler mono-statique (24), ou un radar bi-statique (124),
le radar Doppler mono-statique (24) comportant :
- une antenne radar émission-réception (26) partageant un même centre de phase O, et
- une chaîne radar d'émission (32), connectée à une entrée émission de l'antenne émission-réception (26) du radar mono-statique ; et
- une chaîne radar de réception (34), connectée à une sortie réception de l'antenne émission-réception (26) du radar mono-statique,
ou le radar Doppler bi-statique (124) comportant :
- une première antenne radar émission (126) ayant un centre de phase émission O1 et une deuxième antenne radar réception (128), distante de la première antenne émission (126), ayant un centre de phase réception O2 ; et
- une chaîne radar d'émission (32), connectée à une entrée émission de la première antenne radar émission (126) du radar bi-statique (124) ; et
- une chaine radar de réception (34), connectée à une sortie réception de la deuxième antenne radar de réception (128) du radar bi-statique (124) ;
le système de neutralisation active de l'effet des vibrations d'un aéronef à voilure tournante pour un radar Doppler mono-statique, ou un radar bi-statique étant **caractérisé en ce qu'**il comporte :
un capteur de vibrations tridimensionnel (62 ; 160, 162) par antenne radar (26 ; 126, 128), solidaire de ladite antenne et poche de son centre de phase O, O1 et O2, et
un dispositif (20 ; 120 ; 20 ; 320) d'estimation du déplacement de chaque capteur de vibration et de neutralisation de leur déplacement ;
l'au moins un capteur(s) de vibrations (62 ; 160,162) et le dispositif d'estimation (20 ; 120 ; 220 ; 320) des déplacements de chaque capteur de vibrations et de neutralisation de leur déplacement étant configurés pour :
- dans une première étape (104), mesurer et d'extrapoler temporellement des modes vibratoires au niveau de l'antenne émission-réception ou de la première antenne émission et de la deuxième antenne réception près de leur(s) centre(s) de phase associé(s) ; puis
- dans une deuxième étape (106) estimer des déplacements attendus de l'antenne d'émission-réception ou de la première antenne émission et de la deuxième antenne réception ; puis
- dans une troisième étape (108) compenser les déplacements attendus de la ou des antennes radar au niveau de la chaine émission ou de la chaine réception.

16. Système de neutralisation active selon la revendication 15 dans lequel
le dispositif d'estimation des déplacements de chaque capteur de vibrations et de neutralisation de leur déplacement (20 ; 120 ; 220 ; 320) est configuré, lors de la troisième étape (108 ; 408) de compensation des déplacements attendus, pour :
calculer au moins une projection des déplacements attendus sur une direction de pointage de l'antenne émission-réception ou de la deuxième antenne de réception, et ensuite
déterminer au moins un déphasage de compensation au niveau de la chaine émission (32) ou de la chaine réception (34 ; 234 ; 334) correspondant à une direction de pointage.

17. Système de neutralisation active selon l'une des revendications 15 à 16, lequel
le dispositif d'estimation des déplacements de chaque capteur de vibrations et de neutralisation de leur déplacement (20 ; 120 ; 220 ; 320) est configuré pour :
lors de la première étape de mesure et d'extrapolation temporelle des modes vibratoires d'un capteur de vibrations, mettre en œuvre :
- un filtrage passe-bande de signaux d'accélérations triaxiales mesurées, puis
- une analyse fréquentielle complexe des modes vibratoires ensuite
- une interpolation des profils d'accélération par filtrage des bandes images, puis
- une extrapolation temporelle à des instants immédiatement suivants les accélérations interpolées ; et
lors de la deuxième étape d'estimation des déplacements attendus, mettre en œuvre :
- une intégration des accélérations attendues en des vitesses attendues, puis
- une intégration des vitesses attendues en des déplacements attendus.

18. Système de neutralisation active selon l'une des revendications 15 à 17, dans lequel
le dispositif d'estimation des déplacements de chaque capteur de vibrations et de neutralisation de leur déplacement (20 ; 120 ; 220 ; 320) est configuré en outre pour mette en œuvre une étape d'apprentissage par axe de visée, exécutée au sol ou en vol sur des balises fixes connues, dans laquelle est élaboré un modèle d'affinement des corrections à appliquer au niveau de la chaine radar d'émission ou au niveau de la chaine radar de réception, qui prend en compte les variations des vibrations corrélées avec le régime moteur et la vitesse de l'aéronef à voilure tournante.

## Patentansprüche

1. Verfahren zum aktiven Neutralisieren der Wirkung der Vibrationen eines Drehflügelflugzeugs für ein monostatisches Doppler-Radar (24) oder ein bistatisches Radar (124),
wobei das monostatische Doppler-Radar (24) Folgendes aufweist:
- eine Sende-Empfangs-Radarantenne (26), die ein selbes Phasenzentrum O gemeinsam nutzt, und
- eine Senderadarkette (32), die mit einem Sendeeingang der Sendeempfangsantenne des monostatischen Doppler-Radars verbunden ist; und
- eine Empfangsradarkette (34), die mit einem Empfangsausgang der Sende-Empfangs-Antenne (26) des monostatischen Doppler-Radars verbunden ist,
oder wobei das bistatische Doppler-Radar (124) Folgendes aufweist:
- eine erste Senderadarantenne (126) mit einem Sendephasenzentrum O1 und eine zweite Empfangsradarantenne (128), die von der ersten Sendeantenne entfernt ist und ein Empfangsphasenzentrum O2 hat; und
- eine Senderadarkette (32), die mit einem Sendeeingang der ersten Senderadarantenne (126) des bistatischen Doppler-Radars verbunden ist; und
- eine Empfangsradarkette (34), die mit einem Empfangsausgang der zweiten Empfangsradarantenne (128) des bistatischen Radars (124) verbunden ist;
wobei das aktive Neutralisierungsverfahren durch ein aktives Neutralisierungssystem (20; 120) durchgeführt wird, das Folgendes aufweist:
einen dreidimensionalen Vibrationssensor (62; 160, 162) pro Radarantenne (26; 126, 128), der mit der Antenne (26; 126, 128) fest verbunden ist und sich in der Nähe ihres Phasenzentrums O, O1, O2 befindet, oder einen einzigen dreidimensionalen Vibrationssensor, der von der ersten Senderadarantenne und der zweiten Empfangsradarantenne gemeinsam genutzt wird und sich in der Nähe eines Phasenzentrums O1, O2 befindet, wenn die Sende- und Empfangsantennen nahe beieinander liegen und mechanisch stark gekoppelt sind; und
eine Vorrichtung (64; 164) zum Schätzen der Bewegung jedes Vibrationssensors (62; 160, 162) und zum Neutralisieren ihrer Bewegung,
wobei das aktive Neutralisierungsverfahren **dadurch gekennzeichnet ist, dass** es Folgendes aufweist:
- einen ersten Schritt (104) des Messens und zeitlichen Extrapolierens der Vibrationsmoden an der Sende-Empfangs-Antenne (26) oder der ersten Sendeantenne (126) und der zweiten Empfangsantenne (128) in der Nähe ihrer ein oder mehreren assoziierten Phasenzentren O, O1 und O2; dann
- einen zweiten Schritt (106) des Schätzens der erwarteten Bewegungen der Sende-Empfangs-Antenne (26) oder der ersten Sendeantenne (126) und der zweiten Empfangsantenne (128); dann
- einen dritten Schritt (108) des Kompensierens der erwarteten Bewegungen der Radarantenne (26) oder der Radarantennen (126, 128) in der Sendekette (32) oder der Empfangskette.

2. Verfahren zum aktiven Neutralisieren nach Anspruch 1, wobei
der dritte Schritt (108) des Kompensierens der erwarteten Bewegungen der ein oder mehreren Phasenzentren O, O1, O2 einen vierten Schritt (110) des Berechnens von mindestens einer Projektion der Bewegungen auf eine Ausrichtung der Sende-Empfangs-Antenne oder der zweiten Empfangsantenne und einen fünften Schritt (112) des Bestimmens von mindestens einer Kompensationsphasenverschiebung entsprechend einer Ausrichtung aufweist.

3. Verfahren zum aktiven Neutralisieren nach einem der Ansprüche 1 bis 2, wobei für jeden Messsensor
der erste Schritt (104) des Messens und zeitlichen Extrapolierens der Vibrationsmoden des Vibrationssensors (62; 160, 162) einen Teilschritt (114) des Bandpassfilterns gemessener triaxialer Beschleunigungssignale, einen Teilschritt (115) des komplexen Frequenzanalysierens der Vibrationsmoden und einen Teilschritt (116) des Interpolierens der Beschleunigungsprofile durch Filtern der Bildbänder und des zeitlichen Extrapolierens zu unmittelbar folgenden Zeitpunkten aufweist, die nacheinander ausgeführt werden; und
der zweite Schritt (106) des Schätzens der erwarteten Bewegungen einen Teilschritt (117) des Integrierens der Beschleunigungen in Geschwindigkeiten und einen Teilschritt (118) des Integrierens der Geschwindigkeiten in erwartete Bewegungen aufweist, die nacheinander ausgeführt werden.

4. Verfahren zum aktiven Neutralisieren nach einem der Ansprüche 1 bis 3, das ferner einen Lernschritt pro Sichtachse aufweist, ausgeführt am Boden oder im Flug auf bekannten festen Baken, und konfiguriert zum Liefern eines Modells zur Verfeinerung der in der Senderadarkette oder in der Empfangsradarkette anzuwendenden Korrekturen, das die mit der Motordrehzahl und der Geschwindigkeit des Drehflügelflugzeugs korrelierten Vibrationsvariationen berücksichtigt.

5. Verfahren zum aktiven Neutralisieren nach einem der Ansprüche 1 bis 4, wobei:
das Doppler-Radar ein monostatisches Radar mit einer Sende-Empfangs-Radarantenne mit einem selben Phasenzentrum O ist und
das aktive Neutralisierungssystem einen dreidimensionalen Vibrationssensor aufweist, der mit der Sende-Empfangs-Radarantenne fest verbunden ist und sich in der Nähe ihres Phasenzentrums befindet; und
die Vibrationsmoden der Radarantenne durch den Vibrationssensor im ersten Mess- und zeitlichen Extrapolationsschritt gemessen werden; und
die erwarteten Bewegungen des Phasenzentrums O der Sende-Empfangs-Radarantenne (26) im zweiten Schritt (106) geschätzt werden; und
die Kompensation der erwarteten Bewegungen des Phasenzentrums O der Sende-Empfangs-Antenne bei der Erzeugung der Wellenform (42) in der Senderadarkette (32) erfolgt,
durch Berechnen (110) der Projektion der erwarteten Bewegungen des Phasenzentrums O auf die Ausrichtung der Sende-Empfangs-Radarantenne (26), dann
durch Bestimmen einer Kompensationsphasenverschiebung Δϕ entsprechend der Ausrichtung, die gleich dem Zweifachen der Amplitude dp der erwarteten Bewegungen dividiert durch die Wellenlänge λ des Radars ist.

6. Verfahren zum aktiven Neutralisieren nach einem der Ansprüche 1 bis 4, wobei
das Doppler-Radar ein bistatisches Radar (124) ist, das eine erste Senderadarantenne (126), die ein Sendephasenzentrum O1 hat, und eine zweite Empfangsradarantenne (128) aufweist, die von der ersten Sendeantenne (126) entfernt ist und ein Empfangsphasenzentrum O2 hat; und
das aktive Neutralisierungssystem (120) einen ersten dreidimensionalen Vibrationssensor (160) aufweist, der mit der ersten Senderadarantenne (126) fest verbunden ist und sich in der Nähe ihres Sendephasenzentrums O1 befindet, und einen zweiten dreidimensionalen Vibrationssensor (162), der mit der zweiten Empfangsradarantenne (128) fest verbunden ist und sich in der Nähe ihres Empfangsphasenzentrums O2 befindet; und
die Vibrationsmoden der ersten Senderadarantenne (124) beziehungsweise. der zweiten Empfangsradarantenne (126) im ersten Schritt (104) des Messens und zeitlichen Extrapolierens von dem ersten Vibrationssensor (160) beziehungsweise dem zweiten Vibrationssensor (162) gemessen werden; und
die erwarteten Bewegungen des Sendephasenzentrums O1 der ersten Senderadarantenne (126) und die erwarteten Bewegungen des Empfangsphasenzentrums O2 der zweiten Empfangsradarantenne (128) im zweiten Schritt (106) geschätzt werden; und
die Kompensation der erwarteten Bewegungen des Sendephasenzentrums O1 und des Empfangsphasenzentrums O2 bei der Erzeugung der Wellenform (42) in der Senderadarkette (32) erfolgt,
durch Berechnen (110) der Projektion der erwarteten Bewegungen des Sendephasenzentrums auf die Ausrichtung der ersten Sendeantenne und der Projektion der erwarteten Bewegungen des Zentrums der Empfangsphase Im auf die Ausrichtung der zweiten Empfangsantenne; dann
durch Bestimmen (112) einer Kompensationsphasenverschiebung Δϕ entsprechend den jeweiligen Ausrichtungen der ersten Sendeantenne und der zweiten Empfangsantenne in Abhängigkeit von den jeweiligen Bewegungen des Sendephasenzentrums und des Empfangsphasenzentrums und der Wellenlänge λ des Radarsignals.

7. Verfahren zum aktiven Neutralisieren nach Anspruch 5 oder Anspruch 6, wobei
ein Lernschritt pro Sichtachse am Boden oder im Flug auf bekannten festen Baken durchgeführt wird, wobei der Lernschritt zum Liefern eines Modells zur Verfeinerung der bei der Erzeugung der Wellenform in der Senderadarkette anzuwendenden Korrekturen konfiguriert ist, das die mit der Motordrehzahl und der Geschwindigkeit des Drehflügelflugzeugs korrelierten Vibrationsvariationen berücksichtigt.

8. Verfahren zum aktiven Neutralisieren nach einem der Ansprüche 5 bis 7, das einen Schritt des Detektierens von Störer-Signalen umfasst, die nicht mit den Vibrationen des Drehflügelflugzeugs korreliert sind, wobei der Schritt des Detektierens der Störer-Signale parallel zur Kompensation der empfangenen Radarechos durchgeführt wird, die mit den Bewegungen der ein oder mehreren Antennen korreliert sind.

9. Verfahren zum aktiven Neutralisieren nach einem der Ansprüche 1 bis 4, wobei
das Doppler-Radar ein monostatisches Radar (224) ist, das eine Sende-Empfangs-Radarantenne (26) mit einem selben Phasenzentrum O aufweist, und
das aktive Neutralisierungssystem (220) einen dreidimensionalen Vibrationssensor (62) aufweist, der mit der Sende-Empfangs-Radarantenne (26) fest verbunden ist und sich in der Nähe ihres Phasenzentrums O befindet; und
die Vibrationsmoden der Radarantenne (26) von dem Vibrationssensor (62) im ersten Schritt (104) des Messens und zeitlichen Extrapolierens gemessen werden; und
die erwarteten Bewegungen des Phasenzentrums O der Sende-Empfangs-Radarantenne im zweiten Schritt (106) geschätzt werden; und
die Kompensation der erwarteten Bewegungen des Phasenzentrums O der Sende-Empfangs-Antenne (26) bei der Demodulation (252) des(der) in der Empfangsradarkette (234) empfangenen Radarechos erfolgt,
durch Berechnen (110) der Projektion der erwarteten Bewegungen des Phasenzentrums O auf die Ausrichtung der Sende-Empfangs-Radarantenne (26), dann
durch Bestimmen (292) einer Kompensationsphasenverschiebung Δϕ entsprechend der Ausrichtung, die gleich dem Zweifachen der Amplitude dp der erwarteten Bewegungen des Phasenzentrums O entsprechend der Ausrichtung ist, die durch die Wellenlänge λ des Radarsignals gestreut wird.

10. Verfahren zum aktiven Neutralisieren nach einem der Ansprüche 1 bis 4, wobei das Doppler-Radar ein bistatisches Radar ist, das eine erste Senderadarantenne (124) mit einem Sendephasenzentrum O1 und eine zweite Empfangsradarantenne (126) aufweist, die von der ersten Sendeantenne (124) entfernt ist und ein Empfangsphasenzentrum O2 hat; und
das aktive Neutralisierungssystem einen ersten dreidimensionalen Vibrationssensor (160), der mit der ersten Senderadarantenne (124) fest verbunden ist und sich in der Nähe ihres Sendephasenzentrums O1 befindet, und einen zweiten dreidimensionalen Vibrationssensor (162) aufweist, der mit der zweiten Empfangsradarantenne (126) fest verbunden ist und sich in der Nähe ihres Empfangsphasenzentrums O2 befindet; und
die Vibrationsmoden der ersten Senderadarantenne beziehungsweise der zweiten Empfangsradarantenne von dem ersten Vibrationssensor (162) beziehungsweise dem zweiten Vibrationssensor (164) im ersten Schritt (104) des Messens und zeitlichen Extrapolierens gemessen werden; und
die erwarteten Bewegungen des Sendephasenzentrums der ersten Senderadarantenne und die erwarteten Bewegungen des Empfangsphasenzentrums der zweiten Empfangsradarantenne im zweiten Schritt (106) geschätzt werden; und
die Kompensation der erwarteten Bewegungen des Sendephasenzentrums und des Empfangsphasenzentrums bei der Demodulation (152) des(der) Radarechos in der Empfangsradarkette (252) durchgeführt wird
durch Berechnen der Projektion der erwarteten Bewegungen des Sendephasenzentrums O1 auf die Ausrichtung der ersten Sendeantenne (124) und der Projektion der erwarteten Bewegungen des Empfangsphasenzentrums O2 auf die Ausrichtung der zweiten Empfangsantenne (126); dann
durch Bestimmen einer Kompensationsphasenverschieung Δϕ entsprechend den jeweiligen Ausrichtungen der ersten Sendeantenne (124) und der zweiten Empfangsantenne (126) in Abhängigkeit von den jeweiligen Bewegungen des Sendephasenzentrums O1 und des Empfangsphasenzentrums O2 und der Wellenlänge λ des Radarsignals.

11. Verfahren zum aktiven Neutralisieren nach Anspruch 9 oder Anspruch 10, wobei
ein Lernschritt pro Sichtachse am Boden oder im Flug auf bekannten festen Baken durchgeführt wird, wobei der Lernschritt zum Liefern eines Modells der Verfeinerung der Korrekturen konfiguriert ist, die bei der Demodulation des(der) in der Empfangsradarkette empfangenen Radarechos anzuwenden sind, das die mit der Motordrehzahl und der Geschwindigkeit des Drehflügelflugzeugs korrelierten Vibrationsvariationen berücksichtigt.

12. Verfahren zum aktiven Neutralisieren nach einem der Ansprüche 1 bis 4, wobei
das Doppler-Radar ein monostatisches Radar (324) ist, das eine Sende-Empfangs-Radarantenne (26) mit einem selben Phasenzentrum O aufweist, und
das aktive Neutralisierungssystem (320) ein erstes Subsystem (320₁) zum Messen und Schätzen von Komponenten des erwarteten Bewegungsvektors des Phasenzentrums O der Sende-Empfangs-Antenne (26) einschließlich des dreidimensionalen Vibrationssensors (62), und in Reihe ein zweites Subsystem (320₂) zum Neutralisieren einer vorbestimmten ganzen Zahl N von geschätzten erwarteten Bewegungen des Phasenzentrums O aufweist, assoziiert mit N Ausrichtungen im Empfangsmodus der Sende-Empfangs-Antenne (26), die in dem Verarbeitungsmodul (356) des demodulierten und digitalisierten Signals der Empfangskette (334) eingeschlossen sind, und
die Vibrationsmoden der Radarantenne (26) vom Vibrationssensor (62) im ersten Schritt (104) des Messens und zeitlichen Extrapolierens gemessen werden; und
die erwarteten Bewegungen des Phasenzentrums O der Sende-Empfangs-Radarantenne (26) im zweiten Schritt (106) geschätzt werden; und
die Kompensation der erwarteten Bewegungen des Phasenzentrums der Sende-Empfangs-Antenne am Verarbeitungsmodul (356) des demodulierten und digitalisierten Signals der Empfangskette (334) erfolgt
durch Berechnen der Projektion der erwarteten Bewegungen des Phasenzentrums O auf die N Ausrichtungen der Sende-Empfangs-Radarantenne, dann
durch Bestimmen, für jede der N Ausrichtungen der Sende-Empfangsantenne im Empfangsmodus, einer assoziierten Kompensationsphasenverschiebung Δϕ, die von der Amplitude dp der erwarteten Bewegungen des Phasenzentrums entsprechend der Ausrichtung und der Wellenlänge λ des Radarträgers abhängig ist.

13. Verfahren zum aktiven Neutralisieren nach einem der Ansprüche 1 bis 4, wobei
das Doppler-Radar ein bistatisches Radar ist, das eine erste Senderadarantenne (126) mit einem Sendephasenzentrum O1 und eine zweite Empfangsradarantenne (128) aufweist, die von der ersten Sendeantenne (126) entfernt ist und ein Empfangsphasenzentrum O2 hat; und
das aktive Neutralisierungssystem (320) ein erstes Subsystem (320₁) zum Messen und Schätzen von Komponenten des Vektors von erwarteter Bewegung des Phasenzentrums O1 der Sendeantenne (126) und von Komponenten des Vektors von erwarteter Bewegung des Phasenzentrums O2 der Empfangsantenne (128), einschließlich des ersten und zweiten dreidimensionalen Vibrationssensors (160, 162), und in Reihe ein zweites Subsystem (320₂) zum Neutralisieren einer vorbestimmten ganzen Zahl N von geschätzten erwarteten Bewegungen des Empfangsphasenzentrums O2, die mit N Ausrichtungen im Empfangsmodus der Empfangsantenne (128) assoziiert sind, und von geschätzten erwarteten Bewegungen des Sendephasenzentrums O1 aufweist, die mit der Ausrichtung im Sendemodus der Sendeantenne assoziiert sind, die im Verarbeitungsmodul (356) des demodulierten und digitalisierten Signals der Empfangskette (334) eingeschlossen sind; und
die Vibrationsmoden der ersten Senderadarantenne (126) beziehungsweise der zweiten Empfangsradarantenne (126) im ersten Schritt (104) des Messens und zeitlichen Extrapolierens durch den ersten Vibrationssensor beziehungsweise den zweiten Vibrationssensor gemessen werden; und
die erwarteten Bewegungen des Sendephasenzentrums O1 der ersten Senderadarantenne und die erwarteten Bewegungen des Empfangsphasenzentrums O2 der zweiten Empfangsradarantenne im zweiten Schritt (106) geschätzt werden; und
die Kompensation der erwarteten Bewegungen des Sendephasenzentrums O1 und des Empfangsphasenzentrums O2 im Verarbeitungsmodul (356) des demodulierten und digitalisierten Signals der Empfangskette (334) erfolgt
durch Berechnen der Projektion der erwarteten Bewegungen des Sendephasenzentrums O1 auf die Sendeausrichtung der ersten Sendeantenne (126) und der Projektion der erwarteten Bewegungen des Empfangsphasenzentrums O2 auf die N Ausrichtungen der zweiten Empfangsantenne (128); dann
durch Bestimmen, für jede der N Ausrichtungen der Sende-Empfangs-Antenne im Empfangsmodus einer assoziierten Kompensationsphasenverschiebung Δϕ, die von der Amplitude dp der erwarteten Bewegungen des Empfangsphasenzentrums O2 entsprechend der Ausrichtung, der Amplitude der erwarteten Bewegungen des Sendephasenzentrums O1 und der Wellenlänge λ des Radarträgers abhängig ist.

14. Verfahren zum aktiven Neutralisieren nach Anspruch 9 oder Anspruch 10, wobei
ein Lernschritt pro Sichtachse am Boden oder im Flug auf bekannten festen Baken durchgeführt wird, wobei der Lernschritt zum Liefern eines Modells der Verfeinerung der Korrekturen konfiguriert ist, die im Signalverarbeitungsmodul (356) der Empfängerkette (334) des(der) in der Empfangsradarkette empfangenen Radarechos anzuwenden sind, das die mit der Motordrehzahl und der Geschwindigkeit des Drehflügelflugzeugs korrelierten Vibrationsvariationen berücksichtigt.

15. System zum aktiven Neutralisieren der Wirkung von Vibrationen eines Drehflügelflugzeugs für ein monostatisches Doppler-Radar (24) oder ein bistatisches Radar (124),
wobei das monostatische Doppler-Radar (24) Folgendes aufweist:
- eine Sende-Empfangs-Radarantenne (26), das ein Phasenzentrum O gemeinsam nutzt, und
- eine Senderadarkette (32), die mit einem Sendeeingang der Sende-Empfangsantenne (26) des monostatischen Radars verbunden ist; und
- eine Empfangsradarkette (34), die mit einem Empfangsausgang der Sende-Empfangs-Antenne (26) des monostatischen Radars verbunden ist,
oder wobei das bistatische Doppler-Radar (124) Folgendes aufweist:
- eine erste Senderadarantenne (126) mit einem Sendephasenzentrum O1 und eine zweite Empfangsradarantenne (128), die von der ersten Sendeantenne (126) entfernt ist und ein Empfangsphasenzentrum O2 hat; und
- eine Senderadarkette (32), die mit einem Sendeeingang der ersten Senderadarantenne (126) des bistatischen Radars (124) verbunden ist; und
- eine Empfangsradarkette (34), die mit einem Empfangsausgang der zweiten Empfangsradarantenne (128) des bistatischen Radars (124) verbunden ist;
das System zur aktiven Neutralisierung der Wirkung von Vibrationen eines Drehflügelflugzeugs für ein monostatisches Doppler-Radar oder ein bistatisches Radar, **dadurch gekennzeichnet, dass** es Folgendes aufweist:
einen dreidimensionalen Vibrationssensor (62; 160, 162) pro Radarantenne (26; 126, 128), der mit der Antenne fest verbunden ist und sich in der Nähe von deren Phasenzentrum O, O1 und O2 befindet, und
eine Vorrichtung (20; 120; 20; 320) zum Schätzen der Bewegung jedes Vibrationssensors und zum Neutralisieren ihrer Bewegung;
wobei der mindestens eine Vibrationssensor (62; 160, 162) und die Vorrichtung (20; 120; 220; 320) zum Schätzen der Bewegungen jedes Vibrationssensors und zum Neutralisieren ihrer Bewegung konfiguriert sind zum:
- Messen und zeitlichen Extrapolieren, in einem ersten Schritt (104), von Vibrationsmoden an der Sende-Empfangs-Antenne oder der ersten Sendeantenne und der zweiten Empfangsantenne in der Nähe ihres(ihrer) assoziierten Phasenzentrums(Phasenzentren); dann
- Schätzen, in einem zweiten Schritt (106), der erwarteten Bewegungen der Sende-Empfangs-Antenne oder der ersten Sendeantenne und der zweiten Empfangsantenne; dann
- Kompensieren, in einem dritten Schritt (108), der erwarteten Bewegungen der Radarantenne(n) in der Sendekette oder der Empfangskette.

16. System zum aktiven Neutralisieren nach Anspruch 15, wobei
die Vorrichtung zum Schätzen der Bewegungen jedes Vibrationssensors und zum Neutralisieren ihrer Bewegung (20; 120; 220; 320) während des dritten Schrittes (108; 408) des Kompensierens der erwarteten Bewegungen konfiguriert ist zum:
Berechnen mindestens einer Projektion der erwarteten Bewegungen auf eine Ausrichtung der Sende-Empfangsantenne oder der zweiten Empfangsantenne, und dann
Bestimmen mindestens einer Kompensationsphasenverschiebung in der Sendekette (32) oder der Empfangskette (34; 234; 334) entsprechend einer Ausrichtung.

17. System zum aktiven Neutralisieren nach einem der Ansprüche 15 und 16, wobei
die Vorrichtung zum Schätzen von Bewegungen jedes Vibrationssensors und zum Neutralisieren ihrer Bewegung (20; 120; 220; 320) konfiguriert ist zum:
Implementieren, im ersten Schritt des Messens und zeitlichen Extrapolierens der Vibrationsmoden eines Vibrationssensors, von:
- einer Bandpassfilterung von gemessenen triaxialen Beschleunigungssignalen, dann
- einer komplexen Frequenzanalyse der Vibrationsmoden, dann
- einer Interpolation der Beschleunigungsprofile durch Filtern der Bildbänder, dann
- einer zeitlichen Extrapolation zu Zeitpunkten, die unmittelbar auf die interpolierten Beschleunigungen folgen; und
Implementieren, im zweiten Schritt des Schätzens der zu erwartenden Bewegungen, von:
- einer Integration der erwarteten Beschleunigungen in erwartete Geschwindigkeiten, dann
- einer Integration der erwarteten Geschwindigkeiten in erwartete Bewegungen.

18. System zum aktiven Neutralisieren nach einem der Ansprüche 15 bis 17, wobei die Vorrichtung zum Schätzen der Bewegungen jedes Vibrationssensors und zum Neutralisieren ihrer Bewegung (20; 120; 220; 320) ferner zum Durchführen eines Lernschritts nach Sichtachse konfiguriert ist, der am Boden oder im Flug auf bekannten festen Baken durchgeführt wird, in dem ein Modell zur Verfeinerung der in der Senderadarkette oder in der Empfangsradarkette anzuwendenden Korrekturen ausgearbeitet wird, das die mit der Motordrehzahl und der Geschwindigkeit des Drehflüglers korrelierten Vibrationsvariationen berücksichtigt.

## Claims

1. A method for active neutralization of the effect of the vibrations of a rotary-wing aircraft for a monostatic Doppler radar (24) or a bistatic radar (124),
the monostatic Doppler radar (24) having:
- a transmitting-receiving radar antenna (26) sharing one and the same phase centre O, and
- a radar transmission chain (32), connected to a transmission input of the transmitting-receiving antenna of the monostatic Doppler radar; and
- a radar reception chain (34), connected to a receiving output of the transmitting-receiving antenna (26) of the monostatic Doppler radar,
or the bistatic Doppler radar (124) having:
- a first transmitting radar antenna (126) having a transmission phase centre O1 and a second receiving radar antenna (128), remote from the first transmitting antenna, having a reception phase centre O2; and
- a radar transmission chain (32), connected to a transmission input of the first transmitting radar antenna (126) of the bistatic Doppler radar; and
- a radar reception chain (34), connected to a reception output of the second receiving radar antenna (128) of the bistatic radar (124);
the active neutralization method being implemented by an active neutralization system (20; 120) having:
a three-dimensional vibration sensor (62; 160, 162) for each radar antenna (26; 126, 128), fixed to said antenna (26; 126, 128), and near its phase centre O, O1, O2, or a single three-dimensional vibration sensor, shared by the first transmitting radar antenna and the second receiving radar antenna and near a phase centre O1, O2, when the transmitting and receiving antennas are close to one another and strongly mechanically coupled; and
a device (64; 164) for estimating the movement of each vibration sensor (62; 160, 162) and for neutralizing their movement,
the active neutralization method being **characterized in that** it has:
- a first step (104) of measuring and temporally extrapolating the vibration modes at the transmitting-receiving antenna (26) or at the first transmitting antenna (126) and at the second receiving antenna (128) near their associated phase centre(s) O, O1 and O2; then
- a second step (106) of estimating the expected movements of the transmitting-receiving antenna (26) or of the first transmitting antenna (126) and of the second receiving antenna (128); then
- a third step (108) of compensating for the expected movements of the radar antenna (26) or antennas (126, 128) in the transmission chain (32) or in the reception chain.

2. The active neutralization method according to claim 1, wherein:
the third step (108) of compensating for the expected movements of the phase centre(s) O; O1, O2 has a fourth step (110) of calculating at least one projection of the movements on an aiming direction of the transmitting-receiving antenna or of the second receiving antenna, and a fifth step (112) of determining at least one compensation phase shift corresponding to an aiming direction.

3. The active neutralization method according to one of claims 1 to 2, wherein, for each measurement sensor:
the first step (104) of measuring and temporally extrapolating the vibration modes of the vibration sensor (62; 160, 162) has, executed successively, a sub-step (114) of band-pass filtering of measured triaxial acceleration signals, a sub-step (115) of complex frequency analysis of the vibration modes, and a sub-step (116) of interpolation of the acceleration profiles by image band filtering, and temporal extrapolation at immediately subsequent instants; and
the second step (106) of estimating the expected movements has, executed successively, a sub-step (117) of integration of the accelerations into velocities and a sub-step (118) of integration of the velocities into expected movements.

4. The active neutralization method according to any of claims 1 to 3, further having a step of learning for each boresight axis, executed on the ground or in flight on known fixed beacons, and configured to provide a model for refining the corrections to be applied in the radar transmission chain or in the radar reception chain, which takes into account the variations of the vibrations correlated with the engine speed and the velocity of the rotary-wing aircraft.

5. The active neutralization method according to any of claims 1 to 4, wherein:
the Doppler radar is a monostatic radar having a transmitting-receiving radar antenna with one and the same phase centre O, and
the active neutralization system has a three-dimensional vibration sensor, fixed to the transmitting-receiving radar antenna and near its phase centre; and
the vibration modes of the radar antenna are measured by the vibration sensor in the first step of measurement and temporal extrapolation; and
the expected movements of the phase centre O of the transmitting-receiving radar antenna (26) are estimated in the second step (106); and
the expected movements of the phase centre O of the transmitting-receiving antenna are compensated for during the generation of the waveform (42) in the radar transmission chain (32),
by calculating (110) the projection of the expected movements of the phase centre O on the aiming direction of the transmitting-receiving radar antenna (26), then
by determining a compensation phase shift Δϕ corresponding to the aiming direction, equal to twice the amplitude dp of the expected movements divided by the wavelength λ of the radar.

6. The active neutralization method according to any of claims 1 to 4, wherein:
the Doppler radar is a bistatic radar (124) having a first transmitting radar antenna (126) having a transmission phase centre O1 and a second receiving radar antenna (128), remote from the first transmitting antenna (126) and having a reception phase centre O2; and
the active neutralization system (120) has a first three-dimensional vibration sensor (160), fixed to the first transmitting radar antenna (126) and near its transmission phase centre O1, and a second three-dimensional vibration sensor (162), fixed to the second receiving radar antenna (128) and near its reception phase centre O2; and
the vibration modes of the first transmitting radar antenna (124) and of the second receiving radar antenna (126) respectively are measured in the first step (104) of measurement and temporal extrapolation by the first vibration sensor (160) and by the second vibration sensor (162) respectively; and
the expected movements of the transmission phase centre O1 of the first transmitting radar antenna (126) and the expected movements of the reception phase centre O2 of the second receiving radar antenna (128) are estimated in the second step (106); and
the expected movements of the transmission phase centre O1 and of the reception phase centre O2 are compensated for during the generation of the waveform (42) in the radar transmission chain (32),
by calculating (110) the projection of the expected movements of the transmission phase centre on the aiming direction of the first transmitting antenna and the projection of the expected movements of the centre of the reception phase Im on the aiming direction of the second receiving antenna; then
by determining (112) a compensation phase shift Δϕ corresponding to the respective aiming directions of the first transmitting antenna and of the second receiving antenna, on the basis of the respective movements of the transmission phase centre and of the reception phase centre, and of the wavelength λ of the radar signal.

7. The active neutralization method according to claim 5 or claim 6, wherein:
a step of learning for each boresight axis is executed on the ground or in flight on known fixed beacons, the learning step being configured to provide a model for refining the corrections to be applied during the generation of the waveform in the radar transmission chain which takes into account the variations of the vibrations correlated with the engine speed and the velocity of the rotary-wing aircraft.

8. The active neutralization method according to any of claims 5 to 7, comprising a step of detecting signals from jammers that are not correlated with the vibrations of the rotary-wing aircraft, the step of detecting the signals from jammers being implemented in parallel with the compensation for the received radar echoes, correlated with the movements of the antenna(s).

9. The active neutralization method according to any of claims 1 to 4, wherein:
the Doppler radar is a monostatic radar (224) having a transmitting-receiving radar antenna (26) with one and the same phase centre O, and
the active neutralization system (220) has a three-dimensional vibration sensor (62), fixed to the transmitting-receiving radar antenna (26) and near its phase centre O; and
the vibration modes of the radar antenna (26) are measured by the vibration sensor (62) in the first step (104) of measurement and temporal extrapolation; and
the expected movements of the phase centre O of the transmitting-receiving radar antenna are estimated in the second step (106); and
the expected movements of the phase centre O of the transmitting-receiving antenna (26) are compensated for during the demodulation (252) of the radar echo(es) received in the radar reception chain (234),
by calculating (110) the projection of the expected movements of the phase centre O on the aiming direction of the transmitting-receiving radar antenna (26), then
by determining (292) a compensation phase shift Δϕ corresponding to the aiming direction, equal to twice the amplitude dp of the expected movements of the phase centre O corresponding to the aiming direction scattered by the wavelength λ of the radar signal.

10. The active neutralization method according to any of claims 1 to 4, wherein:
the Doppler radar is a bistatic radar having a first transmitting radar antenna (124) having a transmission phase centre O1 and a second receiving radar antenna (126), remote from the first transmitting antenna (124) and having a reception phase centre O2; and
the active neutralization system has a first three-dimensional vibration sensor (160), fixed to the first transmitting radar antenna (124) and near its transmission phase centre O1, and a second three-dimensional vibration sensor (162), fixed to the second receiving radar antenna (126) and near its reception phase centre O2; and
the vibration modes of the first transmitting radar antenna and of the second receiving radar antenna are measured, in the first step (104) of measurement and temporal extrapolation, by the first vibration sensor (162) and by the second vibration sensor (164) respectively; and
the expected movements of the transmission phase centre of the first transmitting radar antenna and the expected movements of the reception phase centre of the second receiving radar antenna are estimated in the second step (106); and
the expected movements of the transmission phase centre and of the reception phase centre are compensated for during the demodulation (152) of the radar echo(es) in the radar reception chain (252),
by calculating the projection of the expected movements of the transmission phase centre O1 on the aiming direction of the first transmitting antenna (124) and the projection of the expected movements of the reception phase centre O2 on the aiming direction of the second receiving antenna (126); then
by determining a compensation phase shift Δϕ corresponding to the respective aiming directions of the first transmitting antenna (124) and of the second receiving antenna (126), on the basis of the respective movements of the transmission phase centre O1 and of the reception phase centre O2, and of the wavelength λ of the radar signal.

11. The active neutralization method according to claim 9 or claim 10, wherein:
a step of learning for each boresight axis is executed on the ground or in flight on known fixed beacons, the learning step being configured to provide a model for refining the corrections to be applied during the demodulation of the radar echo(es) received in the radar reception chain which takes into account the variations of the vibrations correlated with the engine speed and the velocity of the rotary-wing aircraft.

12. The active neutralization method according to any of claims 1 to 4, wherein:
the Doppler radar is a monostatic radar (324) having a transmitting-receiving radar antenna (26) with one and the same phase centre O, and
the active neutralization system (320) has a first sub-system (320₁) for measuring and estimating the components of the expected movement vector of the phase centre O of the transmitting-receiving antenna (26), including the three-dimensional vibration sensor (62), and, in series, a second sub-system (320₂) for neutralizing a predetermined whole number N of estimated expected movements of the phase centre O, associated with N aiming directions in the reception mode of the transmitting-receiving antenna (26), included in the processing module (356) of the demodulated and digitized signal of the reception chain (334); and
the vibration modes of the radar antenna (26) are measured by the vibration sensor (62) in the first step (104) of measurement and temporal extrapolation; and
the expected movements of the phase centre O of the transmitting-receiving radar antenna (26) are estimated in the second step (106); and
the expected movements of the phase centre of the transmitting-receiving antenna are compensated for in the processing module (356) of the demodulated and digitized signal of the reception chain (334),
by calculating the projection of the expected movements of the phase centre O on the N aiming directions of the transmitting-receiving radar antenna, then
by determining, for each of the N aiming directions of the transmitting-receiving antenna in reception mode, an associated compensation phase shift Δϕ which is a function on the amplitude dp of the expected movements of the phase centre corresponding to the aiming direction and the wavelength λ of the radar carrier.

13. The active neutralization method according to any of claims 1 to 4, wherein:
the Doppler radar is a bistatic radar having a first transmitting radar antenna (126) having a transmission phase centre O1 and a second receiving radar antenna (128), remote from the first transmitting antenna (126) and having a reception phase centre O2; and
the active neutralization system (320) has a first sub-system (320₁) for measuring and estimating the components of the expected movement vector of the phase centre O1 of the transmitting antenna (126) and the components of the expected movement vector of the phase centre O2 of the receiving antenna (128), including the first and second three-dimensional vibration sensors (160, 162), and, in series, a second sub-system (320₂) for neutralizing a predetermined whole number N of estimated expected movements of the reception phase centre O2, associated with N aiming directions in the reception mode of the receiving antenna (128), and of estimated expected movements of the transmission phase centre phase centre O1, associated with the aiming direction in the reception mode of the transmitting antenna, included in the processing module (356) of the demodulated and digitized signal of the reception chain (334); and
the vibration modes of the first transmitting radar antenna (126) and of the second receiving radar antenna (126), respectively, are measured in the first step (104) of measurement and temporal extrapolation by the first vibration sensor and the second vibration sensor respectively; and
the expected movements of the transmission phase centre O1 of the first transmitting radar antenna and the expected movements of the reception phase centre O2 of the second receiving radar antenna are estimated in the second step (106); and
the expected movements of the transmission phase centre O1 and of the reception phase centre O2 are compensated for in the processing module (356) of the demodulated and digitized signal of the reception chain (334),
by calculating the projection of the expected movements of the transmission phase centre O1 on the transmission aiming direction of the first transmitting antenna (126) and the projection of the expected movements of the reception phase centre O2 on the N aiming directions of the second receiving antenna (128); then
by determining, for each of the N aiming directions of the transmitting-receiving antenna in reception mode, an associated compensation phase shift Δϕ which is a function of the amplitude dp of the expected movements of the reception phase centre O2 corresponding to the aiming direction, of the amplitude of the expected movements of the transmission phase centre O1, and of the wavelength λ of the radar carrier.

14. The active neutralization method according to claim 9 or claim 10, wherein:
a step of learning for each boresight axis is executed on the ground or in flight on known fixed beacons, the learning step being configured to provide a model for refining the corrections to be applied in the signal processing module (356) of the reception chain (334) of the radar echo(es) received in the radar reception chain which takes into account the variations of the vibrations correlated with the engine speed and the velocity of the rotary-wing aircraft.

15. System for active neutralization of the effect of the vibrations of a rotary-wing aircraft for a monostatic Doppler radar (24) or a bistatic radar (124),
the monostatic Doppler radar (24) having:
- a transmitting-receiving radar antenna (26) sharing one and the same phase centre O, and
- a radar transmission chain (32), connected to a transmission input of the transmitting-receiving antenna (26) of the monostatic Doppler radar; and
- a radar reception chain (34), connected to a receiving output of the transmitting-receiving antenna (26) of the monostatic Doppler radar,
or the bistatic Doppler radar (124) having:
- a first transmitting radar antenna (126) having a transmission phase centre O1 and a second receiving radar antenna (128), remote from the first transmitting antenna (126), having a reception phase centre O2; and
- a radar transmission chain (32), connected to a transmission input of the first transmitting radar antenna (126) of the bistatic radar (124); and
- a radar reception chain (34), connected to a reception output of the second receiving radar antenna (128) of the bistatic radar (124);
the system for active neutralization of the effect of the vibrations of a rotary-wing aircraft for a monostatic Doppler radar or a bistatic radar being **characterized in that** it has:
a three-dimensional vibration sensor (62; 160, 162) for each radar antenna (26; 126, 128), fixed to said antenna and near its phase centre O, O1 and O2, and
a device (20; 120; 20; 320) for estimating the movement of each vibration sensor and for neutralizing their movement,
the at least one vibration sensor (62; 160, 162) and the device (20; 120; 220; 320) for estimating the movements of each vibration sensor and for neutralizing their movement being configured for:
- in a first step (104), measuring and temporally extrapolating vibration modes at the transmitting-receiving antenna or at the first transmitting antenna and the second receiving antenna near their associated phase centre(s); then
- in a second step (106), estimating the expected movements of the transmitting-receiving antenna or of the first transmitting antenna and the second receiving antenna; then
- in a third step (108), compensating for the expected movements of the radar antenna(s) in the transmission chain or in the receiving chain.

16. The active neutralization system according to claim 15, wherein:
the device for estimating the movements of each vibration sensor and for neutralizing their movement (20; 120; 220; 320) is configured for, in the third step (108; 408) of compensating the expected movements:
calculating at least one projection of the expected movements on an aiming direction of the transmitting-receiving antenna or of the second receiving antenna, and then
determining at least one compensation phase shift in the transmission chain (32) or in the reception chain (34; 234; 334) corresponding to an aiming direction.

17. The active neutralization system according to one of claims 15 to 16, wherein
the device for estimating the movements of each vibration sensor and for neutralizing their movement (20; 120; 220; 320) is configured for:
in the first step of measuring and temporally extrapolating the vibration modes of a vibration sensor, implementing:
- bandpass filtering of measured triaxial acceleration signals, then
- complex frequency analysis of the vibration modes, then
- interpolation of the acceleration profiles through filtering of the image bands, then
- temporal extrapolation at instants which are immediately subsequent to the interpolated accelerations; and
in the second step of estimating the expected movements, implementing:
- integration of the expected accelerations into expected velocities, then
- integration of the expected velocities into expected movements.

18. The active neutralization system according to any of claims 15 to 17, wherein
the device for estimating the movements of each vibration sensor and for neutralizing their movement (20; 120; 220; 320) is also configured for implementing a learning step for each boresight axis, executed on the ground or in flight on known fixed beacons, in which a model is calculated for refining the corrections to be applied in the radar transmission chain or in the radar reception chain, the model taking into account the variations of the vibrations correlated with the engine speed and the velocity of the rotary-wing aircraft.
